(19) Europäisches Patentamt
European Patent Office
Office européen des brevets

(11) **EP 4 556 533 A1**

(12) **EUROPEAN PATENT APPLICATION**

(43) Date of publication:
**21.05.2025 Bulletin 2025/21**

(21) Application number: **23275167.7**

(22) Date of filing: **30.11.2023**

(51) International Patent Classification (IPC):
***C09D 5/00*** *(2006.01)*

(52) Cooperative Patent Classification (CPC):
**C09D 5/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2023 GB 202317579**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **PRESSURE SENSITIVE PAINT COMPOSITION**

(57) The invention relates to pressure sensitive paint compositions comprising Pt or Pd metalloporphyrins of Formula I or Formula II and an oxygen permeable binder where Formula I is

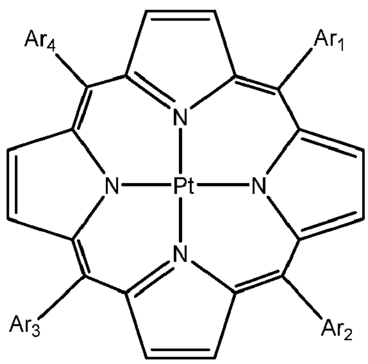

and Formula II is

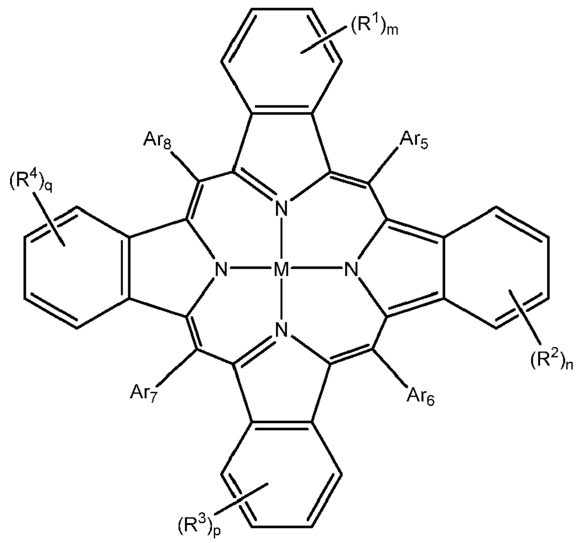

with Ar and R groups as defined herein.

EP 4 556 533 A1

## Description

FIELD

The present invention relates to a pressure sensitive paint composition comprising a platinum-based or palladium-based metallophorphyrin. The composition is useful, for example, in the measurement of pressure distribution at surfaces of test models in wind tunnel testing.

BACKGROUND

Pressure sensitive paints (PSPs) are essentially optical oxygen sensors formulated by mixing a luminophore with an oxygen permeable polymer (binder) and are typically used in the measurement of the surface pressure distribution on a model aircraft during wind tunnel testing. In a pressure sensitive paint, photoexcitation of the luminophore molecule results in the release of lower energy photons through phosphorescence. The luminophore triplet ($T_1$) state readily undergoes collisions with oxygen molecules forming singlet oxygen, $^1O_2$, thereby resulting in phosphorescence quenching. The extent of quenching is directly proportional to the partial pressure of oxygen. Thus, from the measurement of quenching, full field surface pressure maps of a given model can be generated. This contrasts with other methods for measuring surface pressure maps such as the discrete point measurements of pressure taps, which are complicated to install on test models and offer limited (spatial) resolution. Platinum(II)-5,10,15,20-tetrakis-(2,3,4,5,6-pentafluorphenyl)-porphyrin (PtTFPP) is a luminophore known for use in pressure sensitive paint (E. Puklin, B. Carlson, S. Gouin, C. Costin, E. Green, S. Ponomarev, H. Tanji, M. Gouterman, Ideality of pressure-sensitive paint. I. Platinum tetra(pentafluorophenyl) porphine in fluoroacrylic polymer, Journal of Applied Polymer Science. 77 (2000) 2795-2804. https://doi.org/10.1002/1097-4628(20000923)77:13<2795: :AID-APP1>3.0.CO;2-K). The use of pressure sensitive paints in surface pressure mapping has several drawbacks. These include temperature sensitivity, such as that associated with vibrational quenching of the phosphorescent electronic excited state of the luminophore and temperature dependant oxygen diffusion through the paint binder. Ideally, pressure sensitive paints should be temperature insensitive and possess a high brightness whilst maintaining a high sensitivity to pressure. Further, it is desirable that pressure sensitive paints are able to maintain performance after being irradiated for a period of time/repeatedly, i.e. it is desirable that they have good photostability.

There is a need for new pressure sensitive paints that have low temperature sensitivity, high brightness, high pressure sensitivity and/or excellent photostability. There is a need for new pressure sensitive paints that have improved temperature sensitivity, brightness, pressure sensitivity and/or photostability properties. The present invention seeks to meet some or all of these needs.

SUMMARY

According to an aspect of the present invention, there is provided a pressure sensitive paint composition comprising:

(a) a metalloporphyrin of Formula I or Formula II,

where Formula I is

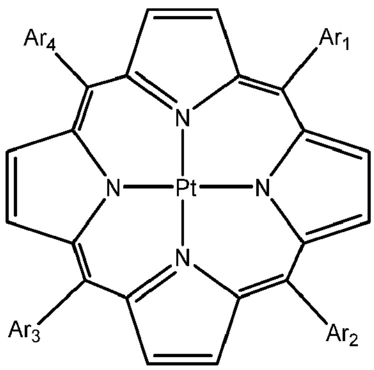

wherein each of $Ar_1$, $Ar_2$, $Ar_3$ and $Ar_4$ is independently a phenyl group optionally substituted with up to four substituents selected from halo and $CF_3$,

and Formula II is

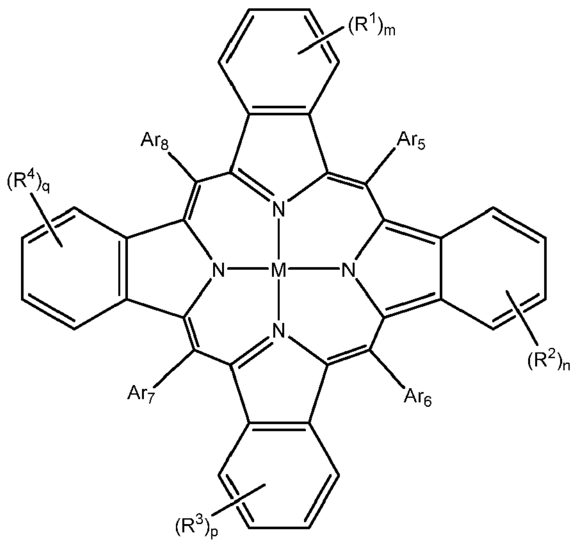

wherein M is Zn, Pt (II) or Pd(II); each of $Ar_5$, $Ar_6$, $Ar_7$ and $Ar_8$ is independently selected from:

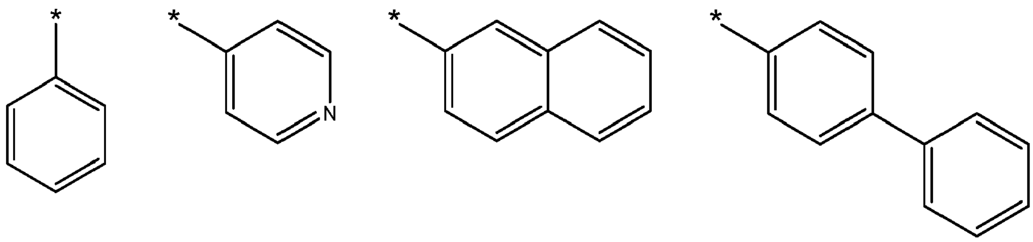

and is optionally substituted with halo, hydroxyl or carboxylate with the proviso that there is no substitution at a position in a ring *ortho* to the carbon directly attached to a point of attachment, where * is a point of attachment; each of $R^1$, $R^2$, $R^3$ and $R^4$ is independently selected from halo; and each of m, n, p and q is from 0 to 2; and

(b) an oxygen-permeable binder.

Preferably, wherein M may be Pt (II) or Pd(II)

According to another aspect of the present invention, there is provided a method of conducting a determination of a pressure distribution at a surface of a test model, comprising the steps of: obtaining a test model which has a surface coated with the pressure sensitive paint composition of the invention; illuminating the coated surface; and measuring the intensity of light emitted from the coated surface.

Optional features of the invention are defined in the appended claims.

BRIEF DESCRIPTION OF THE FIGURES

Embodiments of the invention will now be described by way of example only with reference to the figures, in which:

Figure 1 shows the $^1H$ NMR spectrum of Compound 10 (PtTBTPP) (top) and Compound 11 (PdTBTPP) (bottom)

Figure 2 shows the emission spectra of Comparative Compound 1 (PtTFPP) and Compound 10 (PtTBTPP) in chloroform at a concentration of 0.5 μM. Excitation was into the Soret band maximum of each compound.

Figure 3 shows the modified Stern-Volmer calibrated luminescence response to pressure with associated linear fits of Example 20 (containing Compound 6). $I_{ref}$ and Pref are the luminescent intensity and pressure at 100 kPa and 293 K.

Figure 4 shows the luminescent intensity responses after constant illumination at room temperature and pressure for

45 minutes for Example 20. $I_{ref}$ is the luminescent intensity at 0 minutes.

Figure 5 shows the modified Stern-Volmer calibrated luminescence response to pressure for Comparative Example 1 (containing Comparative Compound 1). $I_{ref}$ and $P_{ref}$ are the luminescent intensity and pressure at 20 °C and 100 kPa.

Figure 6 shows the modified Stern-Volmer calibrated luminescence response to pressure for Comparative Example 4 (containing Comparative Compound 1). $I_{ref}$ and $P_{ref}$ are the luminescent intensity and pressure at 20 °C and 100 kPa.

Figure 7 shows the modified Stern-Volmer calibrated luminescence response to pressure for Example 21. $I_{ref}$ and $P_{ref}$ are the luminescent intensity and pressure at 20 °C and 100 kPa.

Figure 8 shows the luminescent intensity responses after constant illumination at room temperature and pressure for 45 minutes for Comparative Example 4 and Example 21. $I_{ref}$ is the luminescent intensity at 0 minutes.

Figure 9 shows the modified Stern-Volmer calibrated luminescence response to pressure for Comparative Example 3. $I_{ref}$ and $P_{ref}$ are the luminescent intensity and pressure at 20 °C and 100 kPa.

Figure 10 shows the modified Stern-Volmer calibrated luminescence response to pressure for Example 22. $I_{ref}$ and $P_{ref}$ are the luminescent intensity and pressure at 20 °C and 100 kPa.

Figure 11 shows the luminescent intensity responses after constant illumination at room temperature and pressure for 45 minutes for Comparative Example 3 and Example 22. $I_{ref}$ is the luminescent intensity at 0 minutes.

## DETAILED DESCRIPTION

The present invention relates to pressure sensitive paint compositions that comprise specific luminophores, i.e. the metalloporphyrins of Formula I and Formula II as described above. The invention is based, in part, on the recognition that pressure sensitive paint compositions containing these metalloporphyrins have excellent temperature sensitivity, pressure sensitivity, brightness and/or photostability.

### Metalloporphyrins

The pressure sensitive paint composition of the invention can comprise a metalloporphyrin of Formula I:

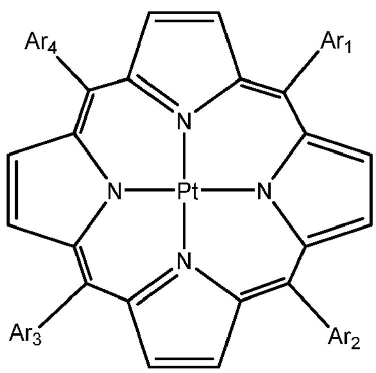

wherein each of $Ar_1$, $Ar_2$, $Ar_3$ and $Ar_4$ is independently a phenyl group optionally substituted with up to four substituents selected from halo and $CF_3$.

The compound of Formula I can have none of $Ar_1$, $Ar_2$, $Ar_3$ and $Ar_4$ substituted. The compound of Formula I can have 1, 2, or 3 of $Ar_1$, $Ar_2$, $Ar_3$ and $Ar_4$ substituted with up to four substituents selected from halo and $CF_3$. The compound of Formula I can have each one of $Ar_1$, $Ar_2$, $Ar_3$ and $Ar_4$ substituted with up to four substituents selected from halo and $CF_3$.

In one embodiment, each of $Ar_1$, $Ar_2$, $Ar_3$ and $Ar_4$ has two substituents independently selected from halo and $CF_3$.

Each of $Ar_1$, $Ar_2$, $Ar_3$ and $Ar_4$ can be independently selected from:

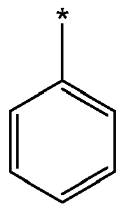
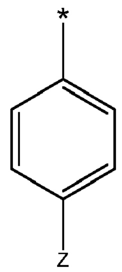
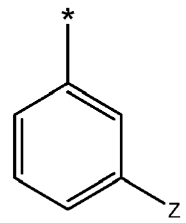
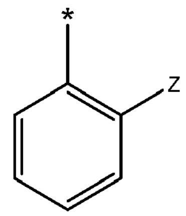
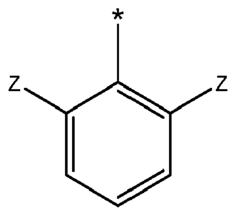
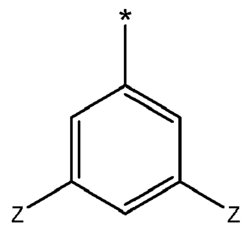
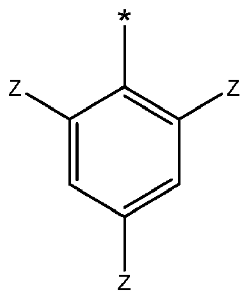
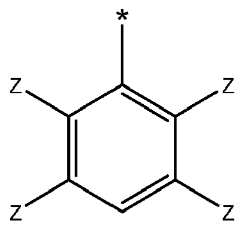

where each Z is independently selected from halo and $CF_3$.

The halo substituents for the metalloporphyrin of Formula I can be selected from: fluoro, chloro or bromo; or selected from fluoro or chloro.

Each of $Ar_1$, $Ar_2$, $Ar_3$ and $Ar_4$ can be independently selected from the following phenyl groups:

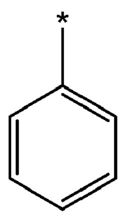
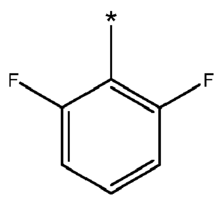
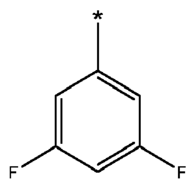
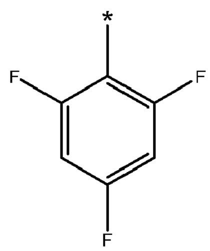
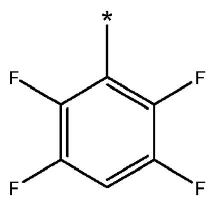
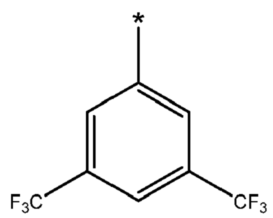
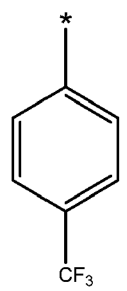
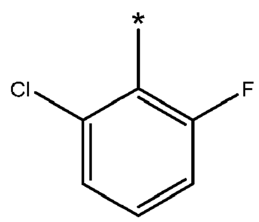
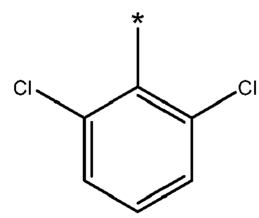
.

In particular, each of $Ar_1$, $Ar_2$, $Ar_3$ and $Ar_4$ can be independently selected from the following substituted phenyl groups:

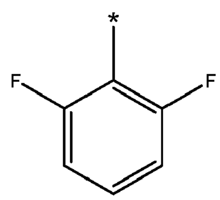
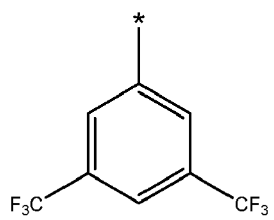
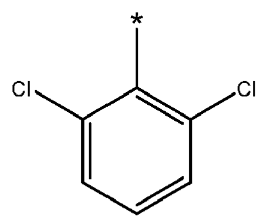
.

Each of $Ar_1$, $Ar_2$, $Ar_3$ and $Ar_4$ can be the same in the embodiments of Formula I described above.

The compound of Formula I can be selected from the compounds shown in Table 1 below.

Table 1

| Compound | Structure |
|---|---|
| 1 | 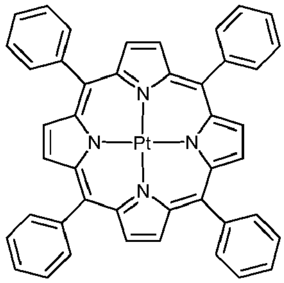 |
| 2 | 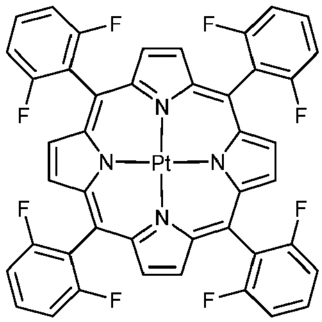 |
| 3 | 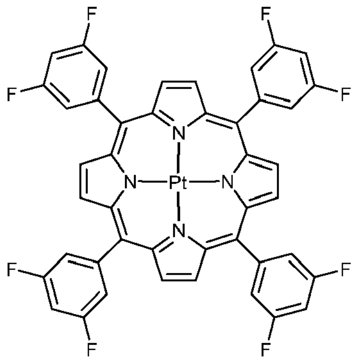 |
| 4 | 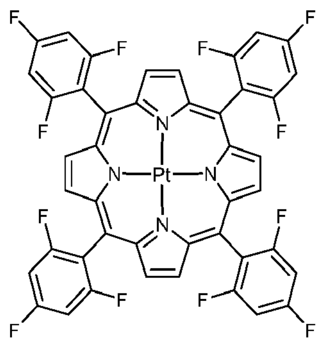 |

(continued)

| Compound | Structure |
|---|---|
| 5 | 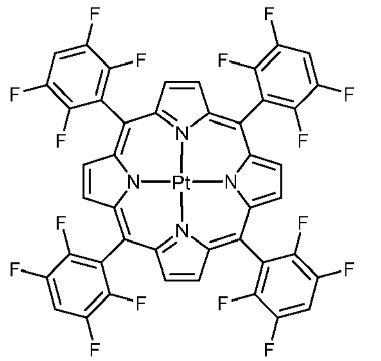 |
| 6 | 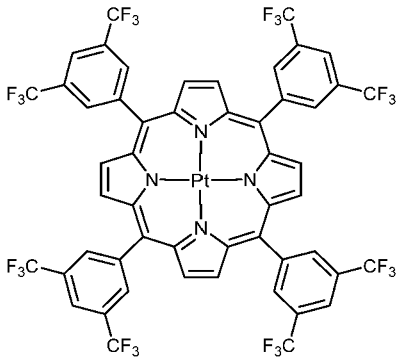 |
| 7 | 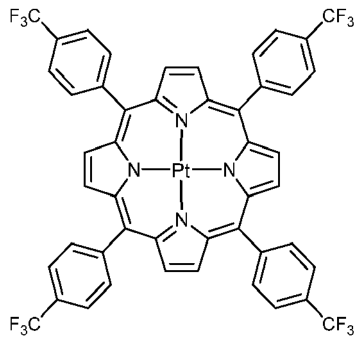 |
| 8 | 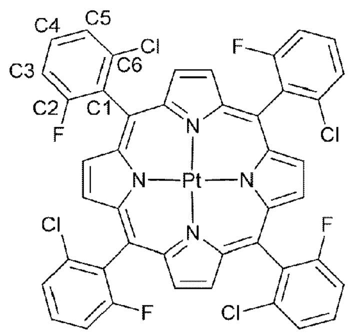 |

(continued)

| Compound | Structure |
|---|---|
| 9 | 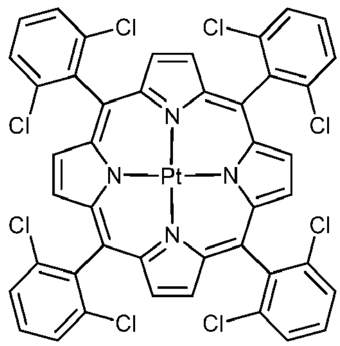 |

In particular, the pressure sensitive paint composition comprises Compound 2, Compound 6 or Compound 9. More particularly, the pressure sensitive paint composition comprises Compound 6.

Pressure sensitive paint compositions comprising compounds of Formula I have been found to have excellent pressure sensitivity, excellent temperature sensitivity and excellent photostability. In particular pressure sensitive paint compositions comprising compounds of Formula I will have a higher pressure sensitivity than pressure sensitive paint compositions comprising some known Ru(II) based luminophores. Further, pressure sensitive paint compositions comprising compounds of Formula I have been found to have higher pressure sensitivity, lower temperature sensitivity and better photostability than those containing PtTFPP. The compounds of Formula I exhibit a relatively high quantum yield. The quantum yield is the amount of light emitted for the amount of light put in and is essentially a measure of efficiency. It is used herein as in indication of brightness. The compounds of Formula I have an intense Soret absorption band resulting in high levels of absorption and therefore more light out. Further, they emit in the visible region of the spectrum, which is relatively easy to detect.

The pressure sensitive paint composition of the invention can comprise a metalloporphyrin of Formula II:

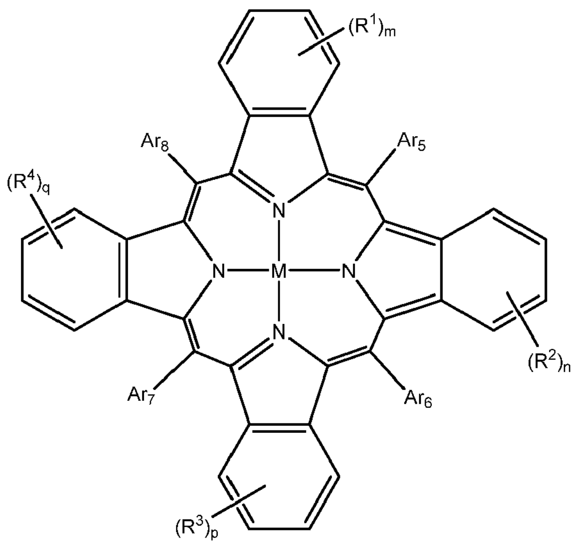

wherein M is Zn, Pt (II) or Pd(II); each of $Ar_5$, $Ar_6$, $Ar_7$ and $Ar_8$ is independently selected from:

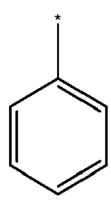 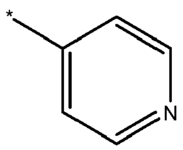 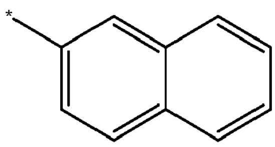 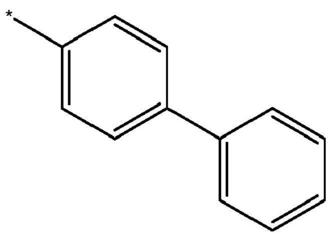

and is optionally substituted with halo, hydroxyl or carboxylic acid group with the proviso that there is no substitution at a position in a ring *ortho* to the carbon directly attached to a point of attachment, where * is a point of attachment; each of $R^1$, $R^2$, $R^3$ and $R^4$ is independently selected from halo; and each of m, n, p and q is from 0 to 2.

Each of $Ar_5$, $Ar_6$, $Ar_7$ and $Ar_8$ can be the same, and for example, can be a phenyl group. Substitution with hydroxyl and/or carboxylic acid groups can render the molecule water soluble. For example, each of $Ar_5$, $Ar_6$, $Ar_7$ and $Ar_8$ can be a phenyl group substituted in the *para* position (i.e. at the position *para* to the carbon directly attached to a point of attachment) with a carboxylic acid group (-COOH). The resultant molecule will be water soluble.

Further, each of m, n, p and q can be 0, i.e. where none of the benzo rings is substituted.

Preferably, wherein M may be Pt (II) or Pd(II)

The compound of Formula II can be selected from the compounds shown in Table 2 below.

Table 2

| Compound | Structure |
|---|---|
| 10 | 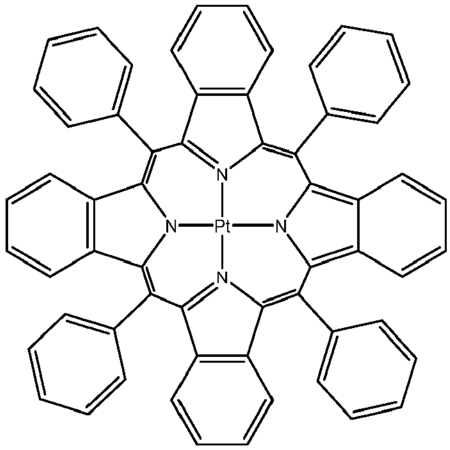 |
| 11 | 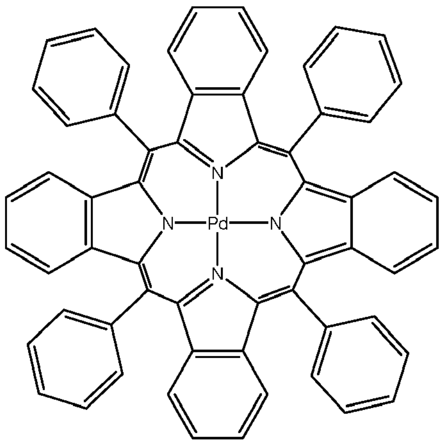 |

Pressure sensitive paint compositions comprising compounds of Formula II have been found to have excellent pressure sensitivity, excellent temperature sensitivity and excellent photostability. In particular pressure sensitive paint compositions comprising compounds of Formula II have been found to have a higher pressure sensitivity, lower temperature sensitivity, better photostability and increased brightness than those containing Pt/PdTFPP. The compounds of Formula II exhibit a very high quantum yield, which, again, is used herein as in indication of brightness. The compounds of Formula II are more soluble in a wide range of solvents unlike traditional metalloporphyrins. They have an intense Soret absorption band as well as an intense Q absorption band, resulting in high levels of absorption and therefore more light out, and allowing for flexibility in the wavelength of the light source used. Finally, they have redshifted emissions into the near infra-red (nIR) region which makes them excellent candidates for pressure sensitive paints comprising two or more components as they minimize spectral overlap which is a common problem with these types of formulations.

The metalloporphyrin compounds of Formula I and II can be prepared by methods known in the art and, for example, as described in the Examples section below.

Oxygen-permeable binder

The oxygen-permeable binder comprises one or more oxygen-permeable polymers. The binder serves to hold the luminophore in place on a surface and permits oxygen in the atmosphere to permeate through to the luminophore. Suitable oxygen-permeable polymers are known in the art. In particular, the oxygen-permeable polymer or oxygen-permeable polymers of the binder can be selected from polystyrene, poly(trimethylsilylpropyne), silicone, polyisobutylmethacrylate and fluoropolymers. Fluoropolymers include the following:

a. Fluoro/isopropyl/butyl (FIB) polymer such as disclosed in Pulkin et al, Ideality of pressure-sensitive paint. I. Platinum tetra(pentafluorophenyl)porphine in fluoroacrylic polymer, Journal of Applied Polymer Science. 77 (2000) 2795-2804). This is a fluoroacrylic polymer. FIB polymer is prepared from the monomers

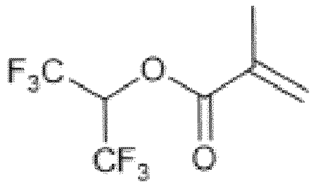

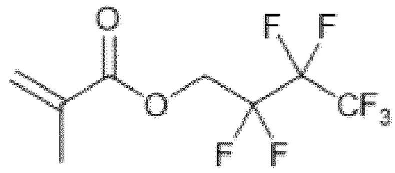

In the cited Pulkin *et al* paper, the FIB polymer has the following structure:

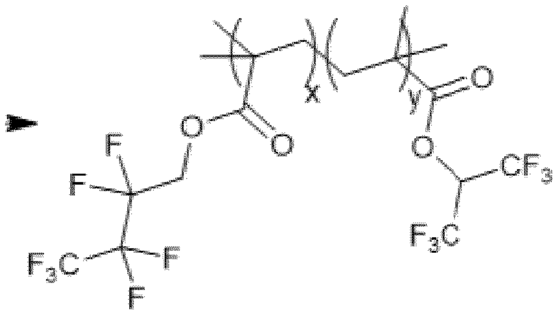

where y is 38 and x is 62.

b. Poly(isobutylmethacrylate-co-trifluoroethylmethacrylate) (shown below also known as poly(IBM-co-TFEM))

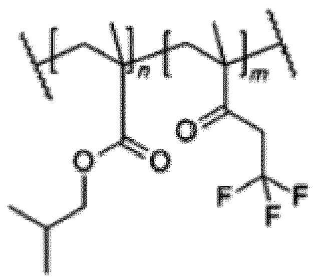

**poly(IBM-*co*-TFEM)**

Typical monomer ratios IBM:TFEM are 1:34, 1:48, 1:1.25, 1:1.92 and 1:3.28.

c. Polymers and copolymers prepared from hexafluoroisopropyl methacrylate) (HFIPMA) 2,2,3,3-Tetrafluoropropyl methacrylate(TFPMA), 2,2,2-trifluoroethyl methacrylate(TFEMA), 1*H*,1*H*,2*H*,2*H-Nonafluorohexyl* methacrylate(NFHMA) and 2,2,3,3,3-pentafluoropropyl methacrylate(PFPMA), such as disclosed in Yun Shao et al., Characterization of Response Frequency for the Pressure-Sensitive Paint Based on Fluorine-Containing Polymer Matrixes Using Oscillating Sound Wave Technique, Sensors (Basel) 2020 Nov; 20(21): 6310 (https://www.ncbi.

nlm.nih.gov/pmc/articles/PMC7663927/).

Solvent

Typically solvent is present in the composition so that the composition is in a form that can be readily applied to a surface, for example, sprayed to a surface. Typically, the compositions are sprayable. The solvent is chosen so that the polymer and the metalloporphyrin dissolve in it, i.e. it forms a solution with the polymer and the metalloporphyrin. Useful solvents include chloroform, dichloromethane, toluene and trifluorotoluene. Water or a water-based (aqueous) solvent may be suitable if the metalloporphyrin is soluble in water, for example, because of the presence of hydroxyl or carboxylic acid substituents.

Other additives

Other additives may be present in the pressure sensitive paint composition. The paint composition can comprise a thickening agent, reference dyes (for example, perylene, MgTFPP, and fluorescein - these are bright non-pressure sensitive luminophores that can be used as a referencing signal), temperature sensitive dyes (for example, Eu/Tb complexes, Coumarins and Rhodamines) and/or ceramic particles. In one embodiment the pressure sensitive paint composition comprises ceramic particles. Typically, the ceramic particles are coated with stearic acid. These serve to increase the response of the paint, i.e. how fast the luminescent intensity of the paint decreases, in order to cope with unsteady aerodynamic measurements. Adding ceramic particles creates a highly porous paint which is in the form of a dispersion that, for example, can be sprayed. Useful ceramic particles have a diameter in the range of 10 to 100 nm. The ceramic particles can be $TiO_2$ or $Al_2O_3$. $TiO_2$ can also be present in the composition as a thickening agent.

Typically the compositions will comprise the metalloporphyrin of Formula I or Formula II in an amount of at least 0.1 wt% or at least 0.3 wt% or from 0.1 to 20 or 25 wt%, or from 0.2 to 15 wt% or from 0.3 to 13 wt% based on the weight of the metalloporphyrin and the oxygen-permeable binder. These ranges apply to the compositions described below.

Typically the compositions can comprise: from 90 or 95 to 99.8 wt% of solvent based on the weight of the solvent, the metalloporphyrin and the oxygen-permeable binder. These ranges apply to the compositions described below.

Typically the compositions can comprise from 85 or 95 to 99.8 wt% of solvent; 0.2 to 5 wt% of the metalloporphyrin and oxygen-permeable binder combined; up to about 12 or 14 wt% ceramic particles and up to 0.6 wt% of other additives, such as $TiO_2$, wherein the total wt% of these components is 100.

The compositions can comprise: from 95 to 99.8 wt% of solvent; 0.2 to 5 wt% of the metalloporphyrin and oxygen-permeable binder combined; and up to 0.6 wt % of other additives, such as $TiO_2$, wherein the total wt% of these components is 100. In this embodiment, the metalloporphyrin and oxygen-permeable binder combined can be present in an amount of 2.6 to 2.8 wt%, and, in particular, the metalloporphyrin can be present in an amount of 2.9 to 3.7 wt% based on the weight of the metalloporphyrin and the oxygen-permeable binder. An exemplary composition comprises: 96.9 wt% of solvent; 2.7 wt% of the metalloporphyrin and oxygen-permeable binder combined; and 0.4 wt% of $TiO_2$, wherein the metalloporphyrin is present in an amount of 3.3 wt% based on the weight of the metalloporphyrin and the oxygen-permeable binder In particular, the oxygen-permeable binder is a fluoropolymer binder, e,g. FIB polymer.

Where the compositions comprises ceramic particles, typically, the composition can comprise about 8 to 12 wt % ceramic particles; about 0.6 to 1.4 wt % of the metalloporphyrin and oxygen-permeable binder combined; and about 85 to 94 wt % of solvent, wherein the total wt% of these components is 100 wt %. The composition can comprise about 9.6 to 9.7 wt% ceramic particles; about 0.83 to 1.24 wt% of the metalloporphyrin and oxygen-permeable binder combined; and about 89.1 to 89.5 wt% of solvent, wherein the total wt% of these components is 100 wt%. An exemplary composition comprises about 9.7 wt % ceramic particles; about 0.8 wt% of the metalloporphyrin and oxygen-permeable binder combined; and about 89.1 wt% of solvent, wherein the total wt% of these components is 100 wt%, wherein the metalloporphyrin is present in an amount of about 12.5 wt% based on the weight of the metalloporphyrin and the oxygen-permeable binder.

The compositions can be prepared by mixing the components together.

Applications

Pressure sensitive paints are typically used in the measurement of surface pressure distribution on a test model during wind tunnel testing. Thus, in another aspect, the invention provides a method of conducting a determination of a pressure distribution at a surface of a test model, comprising the steps of: obtaining a test model which has a surface coated with a pressure sensitive paint composition as described above; illuminating the coated surface; and measuring the intensity of light emitted from the coated surface. Obtaining a test model which has a surface coated with the pressure sensitive paint composition can comprise applying the pressure sensitive paint to a surface of a test model. The surface can be precoated with a white primer. The method can be carried out in a wind tunnel, i.e. the steps of illuminating the coated surface and measuring the intensity of light emitted from the coated surface are carried out while the test model is

subjected to airflow in a wind tunnel.

Once applied to a surface and correctly imaged, the luminescent output of the paint can be directly related to surface static pressure following a suitable calibration. This pressure can be integrated over the surface to give component loads. If the pressure-sensitive paint is applied to the surface in a porous substrate, high-frequency measurements can be taken enabling the study of unsteady aerodynamics.

The following definitions apply herein, unless a context dictates to the contrary.

The term "comprising" is intended also to encompass as alternative embodiments "consisting essentially of" and "consisting of." "Consisting essentially of" permits the inclusion of substances that do not materially affect the basic and novel characteristics of the composition under consideration.

By halo is meant chloro, fluoro, bromo or iodo.

By hydroxyl is meant the group -OH.

By carboxylic acid group is meant -COOH.

EXAMPLES

Pressure sensitive paint compositions of the invention were prepared and investigated as detailed below.

Methodology

Unless otherwise stated, all reagents and solvents were purchased from commercial suppliers and used without purification. All compounds were prepared according to literature methods. Flash column chromatography was performed with silica gel 60 (230-400 mesh) from Sigma Aldrich chemical company. All NMR Spectra were obtained using either a Bruker Avance III 500 MHz Prodigy instrument or a Bruker Avance III 400 MHz Prodigy instrument at the University of Manchester. Chemical shifts are recorded in parts per million (ppm) from high to low frequency and referenced to the residual solvent resonance. Coupling constants (*J*) are reported in Hertz (Hz) and splitting patterns are designated as follows: b = broad, s = singlet, d = doublet, t = triplet, q = quartet, p = pentet and m = multiplet. Assignments for atom subsitutions on the phenyl rings are denoted as o (*ortho*-), *p* (*para*-), *m* (*meta*-) and *i* (*ipso*-). Mass Spectra were obtained through the Mass Spectrometry services in the School of Chemistry at the University of Manchester.

UV-vis spectra were recorded on a Mettler Toledo UV5Bio spectrophotometer using 10 mm path length quartz cuvettes with concentrations ~$10^{-6}$ M in spectroscopic grade solvents. Steady state emission and excitation spectra were recorded on an Edinburgh Instruments FP920 Phosphorescence Lifetime Spectrometer equipped with a 450 W steady state xenon lamp, a 5 W microsecond pulsed xenon flashlamp, (with single 300 mm focal length excitation and emission monochromators in Czerny Turner configuration), and interchangeable EPL pulsed diode lasers with 46 excitation sources, and a red sensitive photomultiplier in Peltier (air cooled) 53 housing (Hamamatsu R928P) and a liquid nitrogen cooled NIR PMT (Hamamatsu R5509-73) detectors. The Pt(II) porphyrin emission spectra and phosphorescence lifetimes were recorded in degassed chloroform dried over 4 Å molecular sieves. Quantum yields were calculated using the relative method, with TPP in toluene ($\Phi$ = 0.11) as a standard (https://pubs-acs-org.manchester.idm.oclc.org/doi/full/10.1021/jp049898v).

The performance of the pressure sensitive paint formulations was investigated in the standard approach of exposing a painted aluminium square to a range of different temperatures and pressures under highly controlled conditions. This *a-priori* calibration was conducted using the recently upgraded University of Manchester PSP calibration chamber. The chamber is machined from a block aluminium with a 10mm thick 80mm diameter quartz window. Electrical and passthrough enable power and temperature signals to be routed to the controlling systems without leaks. The PSP calibration chamber pressure is controlled using a GE-PACE1000 pressure controller (connected to a vacuum roughing pump and the in-house compressed air supply). The pressure controller was capable of holding pressure constant to within 1-2 Pa for all conditions tested. Temperature of the sample was controlled using a Peltier device powered by a TEC-1091 mono channel bi-directional Peltier driver from Meetstetter Engineering. The temperature is monitored and logged using a PT100 RTD giving a quoted temperature stability of 0.01K. Using this system, pressures were varied from 10kPa up to 150kPa in steps of 10kPa for three temperatures of 273, 293, and 313K.

Images of the pressure sensitive paints were recorded using a Teledyne Dalse Genie Nano M1920 camera with a 12 mm F1.2 lens fitted with a 610nm long pass filter. At each condition, 30 images were recorded and averaged to improve signal to noise ratio. Typical exposure times were 20,000 $\mu$s. These values were below the values at which there is a significant increase in dark current from this camera as shown in literature. Illumination was provided by an ISSI air cooled 5 W UV LED lamp which was left to settle to thermal equilibrium for 5 minutes before image acquisition (with the sample covered to avoid photodegradation). All images were read into MATLAB and processed to produce calibration curves and estimate sensitivities. Photodegradation experiments were performed at atmospheric pressure and room temperature, recording 30 images every 3 minutes for 45 minutes of constant illumination.

The pressure sensitivity at a certain temperature $S_P(T)$ was calculated from the slope of the modified Stern-Volmer calibration plots using Equation 1. With $I_{ref}$ and $P_{ref}$ being the luminescent intensity and pressure at 100 kPa and 293 K.

$$\frac{I_{ref}}{I} = S_P(T)\frac{P}{P_{ref}} + C(T) \quad (1)$$

The temperature sensitivity at a given pressure $S_T(P)$ is calculated as the percentage change in $I_{ref}/I$ with respect to the temperature using Equation 2. With $I_{ref}$ being the luminescent intensity at 100 kPa and 293 K.

$$\frac{I_{ref}}{I} = S_T(P)T + C(P) \quad (2)$$

<u>Preparation of metalloporphyrins of Formula I</u>

The structures and names of the metalloporphyrins of Formula I are given in Table 1 above. These compounds along with Comparative Compound 1 (platinum(II)-5,10,15,20-tetrakis-(2,3,4,5,6-pentafluorphenyl)-porphyrin (PtTFPP)) and Comparative Compound 2 (palladium (I I)-5,10,15,20-tetrakis-(2,3,4,5,6-pentafluorphenyl)-porphyrin (PdTFPP)) were prepared as follows. The freebase porphyrins were prepared using standard literature reactions (see Jonathan S. Lindsey et al., Rothemund and Adler-Longo reactions revisited: synthesis of tetraphenylporphyrins under equilibrium conditions, The Journal of Organic Chemistry 1987 52 (5), 827-836, DOI: 10.1021/jo00381a022).

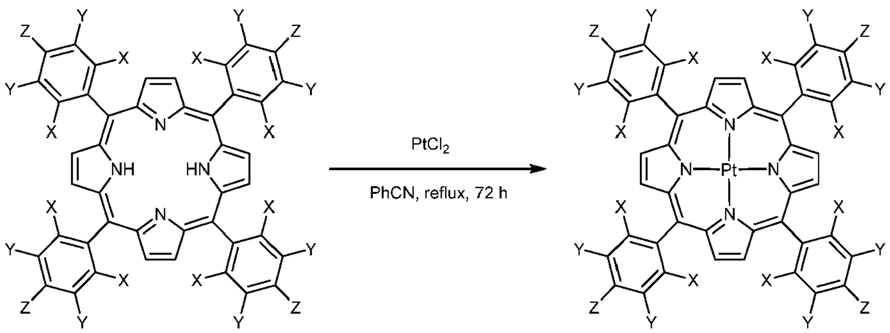


$PtCl_2/PdCl_2$ (0.54 mmol) and PhCN (18 mL) were added to a two neck round bottom flask and then heated to 120 °C while stirring under a constant supply of argon to form a yellow solution. The appropriate free base porphyrin (0.13 mmol) was then added, and the reaction was heated to reflux temperature for 72 hours. The solvent was then removed by vacuum distillation and the crude mixture purified by column chromatography ($CHCl_3$ 100%) to afford a red solid for each of Compounds 1 to 9 and for Comparative Compound 1 and 2 (82-92%).

The characterisation data for each compound are given below.

**Compound 1:** (96.9 mg, 0.12 mmol, 92 %). **$^1$H NMR** (400 MHz, $CDCl_3$) $\delta$ = 8.76 (s, $^4J_{H\text{-}Pt}$ = 4.2 Hz, 8H, β-pyrrole-H), = 8.16 (d, $^3J_{H\text{-}H}$ = 6.4 Hz, 8H, *m*-phenyl-H), $\delta$ = 7.71 - 7.82 (m, 12H, o and *p*-phenyl-H). **$^{13}$C{$^1$H} NMR** (500 MHz, $CDCl_3$) $\delta$ = 141.51 (s, *i*-phenyl-C), = 141.00 (s, $\alpha$-pyrrole-C), $\delta$ = 134.03 (s, *m*-phenyl-C), $\delta$ = 130.86 (s, $^3J_{C\text{-}Pt}$ = 15.4 Hz, β-pyrrole-C), $\delta$ = 128.00 (s, *p*-phenyl-C), $\delta$ = 126.94 (s, *o*-phenyl-C), $\delta$ = 122.47 (s, *meso*-C). **HRMS-ESI(+)** 807.1958 $[M]^+$, calculated for $C_{44}H_{28}N_4Pt$: 807.1956. UV-Vis [$\lambda_{max}$ nm ($\varepsilon$ $M^{-1}cm^{-1}$) in $CHCl_3$] 402 (233,100), 512 (18,600), 540 (3,800).

**Compound 2:** (104.7 mg, 0.11 mmol, 85%). **$^1$H NMR** (500 MHz, $CDCl_3$) $\delta$ = 8.72 (s, $^4J_{H\text{-}Pt}$ = 5.0 Hz, 8H, β-pyrrole-H), $\delta$ = 7.68-7.75 (m, $^3J_{H\text{-}H}$ = 7.4 Hz, 4H, *p*-phenyl-H), $\delta$ = 7.37 (t, $^3J_{H\text{-}H}$ = 7.5 Hz, 8H, m-phenyl-H). **$^{13}$C{$^1$H} NMR** (500 MHz, $CDCl_3$) $\delta$ = 161.25 (dd, $^2J_{C\text{-}F}$ = 249.9 Hz, $^3J_{C\text{-}F}$ = 5.7 Hz, o-phenyl-C), $\delta$ = 141.21 (s, α-pyrrole-C), $\delta$ = 131.26 (t, $^3J_{C\text{-}F}$ = 9.8 Hz, p-phenyl-C), $\delta$ = 130.78 (s, $^3J_{C\text{-}Pt}$ = 15.4 Hz, β-pyrrole-C), $\delta$ = 117.54 (td, *i*-phenyl-C), $\delta$ = 111.41 (dt, $^2J_{C\text{-}F}$ = 19.2 Hz, $^4J_{C\text{-}F}$ = 4.3 Hz, *m*-phenyl-C), $\delta$ = 108.76 (s, meso-C). **$^{19}$F NMR** (500 MHz, $CDCl_3$) $\delta$ = -108.12 (s, $^3J_{F\text{-}H}$ = 6.2 Hz, 8F, *o*-phenyl-F). **HRMS-ESI(+)** 950.1195 [M]+, calculated for $C_{44}H_{20}N_4F_8Pt$: 950.1181. **UV-Vis** [$\lambda_{max}$ nm ($\varepsilon$ $M^{-1}cm^{-1}$) in $CHCl_3$] 396 (223,800), 508 (17,000), 538 (15,200).

**Compound 3**: (106.6 mg, 0.11 mmol, 86%). **$^1$H NMR** (500 MHz, $CDCl_3$) δ = 8.81 (s, $^4J_{H-Pt}$ = 4.9 Hz, 8H, β-pyrrole-H), δ = 7.73 (dd, $^3J_{H-F}$ = 7.3 Hz, $^4J_{H-H}$ = 1.9 Hz, 8H, o-phenyl-H), δ = 7.31 (tt, 3JH-F = 9.1 Hz, $^4J_{H-H}$ 2.3 Hz, 4H, p-phenyl-H). **$^{13}$C{$^1$H} NMR** (500 MHz, $CDCl_3$) δ = 161.60 (dd, $^1J_{C-F}$ = 250.5 Hz, $^3J_{C-F}$ = 13.2 Hz, *m*-phenyl-C), δ = 144.09 (t, $^3J_{C-F}$ = 9.8 Hz *i*-phenyl-C),), δ = 140.67 (s, α-pyrrole-C), δ = 131.09 (s, $^3J_{C-Pt}$ = 15.4 Hz, β-pyrrole-C), δ = 120.36 (s, *meso*-C), δ = 117.46 (dd, $^2J_{C-F}$ = 18.7 Hz, $^1J_{C-F}$ = 6.5 Hz, *o*-phenyl-C), δ = 104.19 (t, 2JC-F = 18.7 Hz 25.0 Hz, p-phenyl-C). **$^{19}$F NMR** (500 MHz, CDCl3) δ = 110.94 (t, $^3J_{F-H}$ = 8.2 Hz, 8F, m-phenyl-F). **HRMS-ESI(+)** 952.1284 [M+H]$^+$, calculated for $C_{44}H_{21}N_4F_8Pt$: 952.1284. UV-Vis [$\lambda_{max}$ nm (ε $M^{-1}cm^{-1}$) in $CHCl_3$] 398 (221,400), 509 (18,200), 536 (9,100).

**Compound 4:** (119.8 mg, 0.12 mmol, 90%). **$^1$H NMR** (500 MHz, $CDCl_3$) δ = 8.84 (s, $^4J_{H-Pt}$ = 5.1 Hz 8H, β-pyrrole-H), δ = 7.16 (p, $^3J_{H-F}$ = 7.5 Hz, 8H, m-phenyl-H). **$^{13}$C{$^1$H} NMR** (500 MHz, $CDCl_3$) δ = 163.69 (dt, $1J_{C-F}$ = 252.0 Hz, $^3J_{C-F}$ = 15.0 Hz, p-phenyl-C), δ = 162.44 (dq, $^1J_{C-F}$ = 250.1 Hz, $^3J_{C-F}$ = 7.5 Hz, o-phenyl-C), δ = 141.44 (s, *α*-pyrrole-C), δ = 130.82 (s, $^3J_{C-Pt}$ = 15.3 Hz β-pyrrole-C), δ = 114.41 (td, $^2J_{C-F}$ = 23.0 Hz, $^4J_{C-F}$ = 4.6 Hz *i*-phenyl-C), δ = 108.15 (s, meso-C), δ = 100.58 (tt, $^2J_{C-F}$ = 24.1 Hz, $^4J_{C-F}$ = 2.4 Hz, *m*-phenyl-C). **$^{19}$F NMR** (500 MHz, $CDCl_3$) δ = -104.91 (t, $^3J_{F-H}$ = 6.9 Hz, 8F, o-phenyl-F), δ = -105.71 (p, $^3J_{F-H}$ = 7.5 Hz, 4F *p*-phenyl-F). **HRMS-ESI(+)** 1024.0908 [M+H]$^+$, calculated for $C_{44}H_{21}N_4F_8Pt$: 102. **UV-Vis** [$\lambda_{max}$ nm (ε $M^{-1}cm^{-1}$) in $CHCl_3$] 395 (258,700), 507 (18,000), 540 (18,400).

**Compound 5:** (116.1 mg, 0.11 mmol, 82%). **$^1$H NMR** (500 MHz, $CDCl_3$) δ = 8.83 (s, $^4J_{H-Pt}$ = 5.1 Hz, 8H, β-pyrrole-H), δ = 7.63 (p, $^3J_{H-F}$ = 8.5 Hz, 4H, *p*-phenyl-H). **$^{13}$C{$^1$H} NMR** (500 MHz, CDCl3) δ = 146.16 (dm, $^1J_{C-F}$ = 250.0 Hz, o and m-phenyl-C), δ = 141.13 (s, α-pyrrole-C), δ = 131.36 (s, $^3J_{C-Pt}$ = 15.2 Hz, β-pyrrole-C), δ = 120.75 (t, $^2J_{C-F}$ = 18.8 Hz, *ipso*-phenyl-C), δ = 107.74 (t, $^2J_{C-F}$ = 22.4 Hz, p-phenyl-C), δ = 107.41 (s, *meso*-C). **$^{19}$F NMR** (500 MHz, $CDCl_3$) δ = -137.12 (m, 8F, o-phenyl-F), δ = -138.30 (p, $^3J_{F-H}$ = 11.5 Hz, 8F *m*-phenyl-F). **HRMS-ESI(+):** 1096.0542 [M+H]$^+$, calculated for $C_{44}H_{21}N_4F_8Pt$: 1096.0536. **UV-Vis** [$\lambda_{max}$ nm (ε $M^{-1}cm^{-1}$) in $CHCl_3$] 393 (290,500), 509 (18,300), 540 (24,500).

**Comparative Compound 1:** (131.9 mg, 0.11 mmol, 87 %). **$^1$H NMR** (500 MHz, $CDCl_3$) δ = 8.83 (s, $^4J_{H-Pt}$ = 5.0 Hz, 8H, β-pyrrole-H). **$^{13}$C{$^1$H} NMR** (500 MHz, $CDCl_3$) δ = 146.52 (dm, $^1J_{C-F}$ = 249.8 Hz, o-phenyl-C), δ = 142.54 (dm, $^1J_{C-F}$ = 249.4 Hz, *p*-phenyl-C), δ = 141.42 (s, α-pyrrole-C), δ = 137.77 (dm, $^1J_{C-F}$ = 251.1 Hz *m*-phenyl-C), δ = 131.20 (s, $^3J_{C-Pt}$ = 15.5 Hz, β-pyrrole-C), δ = 114.91 (td, $^2J_{C-F}$ = 19.4 Hz, $^3J_{C-F}$ = 3.2 Hz *i*-phenyl-C), δ = 106.49 (s, *meso*-C). **$^{19}$F NMR** (500 MHz, $CDCl_3$) δ = -136.37 (m, 18F phenyl-F), δ = -151.00 (tm, $^2J_{C-F}$ 20.4 Hz, 2F, phenyl-F), δ = -161.03 (tm, $^2J_{C-F}$ = 21.9 Hz, 1F, phenyl-F). **HRMS-ESI(+)** 1168.0167 [M+H]$^+$, calculated for $C_{44}H_9N_4F_{20}Pt$: 1168.0150. **UV-Vis** [$\lambda_{max}$ nm (ε $M^{-1}cm^{-1}$) in $CHCl_3$] 392 (296,500), 508 (18,800), 540 (28,400).

**Compound 6**: (146.0 mg, 0.11 mmol, 83%). **$^1$H NMR** (500 MHz, $CDCl_3$) δ = 8.77 (s, $^4J_{H-Pt}$ = 4.3 Hz, 8H, β-pyrrole-H), δ = 8.70 (s, 8H, *o*-phenyl-H), δ = 8.42 (s, 4H, *p*-phenyl-H). **$^{13}$C{$^1$H} NMR** (500 MHz, $CDCl_3$) δ = 142.88 (s, *i*-phenyl-C), δ = 141.07 (s, α-pyrrole-C), δ = 133.23 (s, *o*-phenyl-C), δ = 131.52 (s, $^3J_{C-Pt}$ = 15.0 Hz, β-pyrrole-C), δ = 130.90 (q, $^2J_{C-F}$ = 33.5 Hz, *m*-phenyl-C), δ = 123.42 (q, $^1J_{C-F}$ = 272.8 Hz, $CF_3$), δ = 122.78 -122.50 (m, *p*-phenyl-C), δ = 120.00 (s, *meso*-C). **$^{19}$F NMR** (500 MHz, $CDCl_3$) δ = -62.40 (s, 24F, $CF_3$). **MS-ESI(+)**: 1351.0919 [M]$^+$. **UV-Vis** [$\lambda_{max}$ nm (ε $M^{-1}cm^{-1}$) in $CHCl_3$] 399 (241,000), 510 (19,400), 540 (10,600).

**Compound 7:** (128.5 mg, 0.12 mmol, 92%). **$^1$H NMR** (500 MHz, $CDCl_3$) δ = 8.71 (s, $^4J_{H-Pt}$ = 4.5 Hz, 8H, β-pyrrole-H), δ = 8.28 (d, $^3J_{H-H}$ = 7.9 Hz 8H, phenyl-H), δ = 8.03 (d, $^3J_{H-H}$ = 7.9 Hz 8H, phenyl-H). **$^{13}$C{$^1$H} NMR** (500 MHz, $CDCl_3$) δ = 144.81 (s, *ipso*-phenyl-C), δ = 140.81 (s, α-pyrrole-C), δ = 134.10 (s, *o*-phenyl-C), δ = 131.12 (s, $^3J_{C-Pt}$ = 15.4 Hz, β-pyrrole-C), δ = 130.65 (q, $^2J_{C-F}$ = 32.2 Hz, *p*-phenyl-C), δ = 124.49 (q, $^1J_{C-F}$ = 272.16 $CF_3$), δ = 124.12 (q, $^3J_{C-F}$ = 3.6 *m*-phenyl-C), δ = 121.34 (s, *meso*-C). **$^{19}$F NMR** (500 MHz, $CDCl_3$) δ = -62.12 (s, 12F, phenyl-CFs). **HRMS-ESI(+)** 1080.1521 [M+H]$^+$, calculated for $C_{48}H_{25}N_4F_{12}Pt$: 1080.1538. **UV-Vis** [$\lambda_{max}$ nm (ε $M^{-1}cm^{-1}$) in $CHCl_3$] 400 (241,600), 510 (18,600), 540 (8,000).

**Compound 8**: (112.9 mg, 0.11 mmol, 85%). **$^1$H NMR** (400 MHz, $CDCl_3$) δ = 8.67 (s, $^4J_{H-Pt}$ = 4.8 Hz, 8H, β-pyrrole-H), δ = 7.77 - 7.70 (m, 4H, *p*-phenyl-H), δ = 7.70 - 7.60 (m, 4H, *m*-phenyl-5), δ = 7.51 - 7.38 (m, 4H, *m*-phenyl-H). **$^{13}$C{$^1$H} NMR** (500 MHz, $CDCl_3$) δ = 162.66 (dm, $^1J_{C-F}$ = 251.2 Hz o-phenyl-C2), δ = 140.9 (s, α-pyrrole-C), δ = 138.67 - 138.32 (m, *o*-phenyl-C6), δ = 131.12 (d, $^3J_{C-F}$ = 9.1 Hz, *p*-phenyl-C4), δ = 130.49 (s, $^3J_{C-Pt}$ = 15.1 Hz, β-pyrrole-C), δ = 127.50 (d, $^2J_{C-F}$ = 19.9 Hz, i-phenyl-C1), δ = 124.22 (s, m-phenyl-C5), δ = 114.23 (d, $^2J_{C-F}$ = 22.6 Hz m-phenyl), δ = 112.59 (s, meso-C). **$^{19}$F NMR** (400 MHz, $CDCl_3$) δ = -105.16 (m 4F, o-phenyl-F). **HRMS-ESI(+)** 1017.0103 [M]$^+$, calculated for $C_{44}H_{21}N_4F_4Cl_4Pt$: 1017.0079. **UV-Vis** [$\lambda_{max}$ nm (ε $M^{-1}cm^{-1}$) in $CHCl_3$] 397 (271,900), 509 (18,800), 541 (18,050).

**Compound** 9: (123.5 mg, 0.11 mmol, 88%). **$^1$H NMR** (500 MHz, $CDCl_3$) δ = 8.58 (s, $^4J_{H-Pt}$ = 4.7 Hz, 8H, β-pyrrole-H), δ = 7.80-7.74 (m, 8H, m-phenyl-H), δ = 7.72-7.65 (m, 4H, *p*-phenyl-H). **$^{13}$C{$^1$H} NMR** (500 MHz, $CDCl_3$) δ = 140.41 (s, α-pyrrole-C), δ = 138.76 (s, *i*-phenyl-C), δ = 138.51 (s, o-phenyl), δ = 130.62 (s, *p*-phenyl-C), δ = 130.00 (s, $^3J_{C-Pt}$ = 15.3 Hz, β-pyrrole-C), δ = 127.89 (s, *m*-phenyl-C), δ = 116.68 (s, *meso*-C). **HRMS-ESI(+)** 1082.8891 [M]$^+$, calculated for $C_{44}H_{20}N_4Cl_8Pt$: 1082.8881. **UV-Vis** [$\lambda_{max}$ nm (ε $M^{-1}cm^{-1}$) in $CHCl_3$] 399 (279,400), 511 (24,200), 542 (25,400).

Preparation of metalloporphyrins of Formula II

The structures and names of the metalloporphyrins of Formula II are given in Table 2 above. Compound 10 (PtTBTPP) and Compound 11 (PdTBTPP) were prepared as described below.

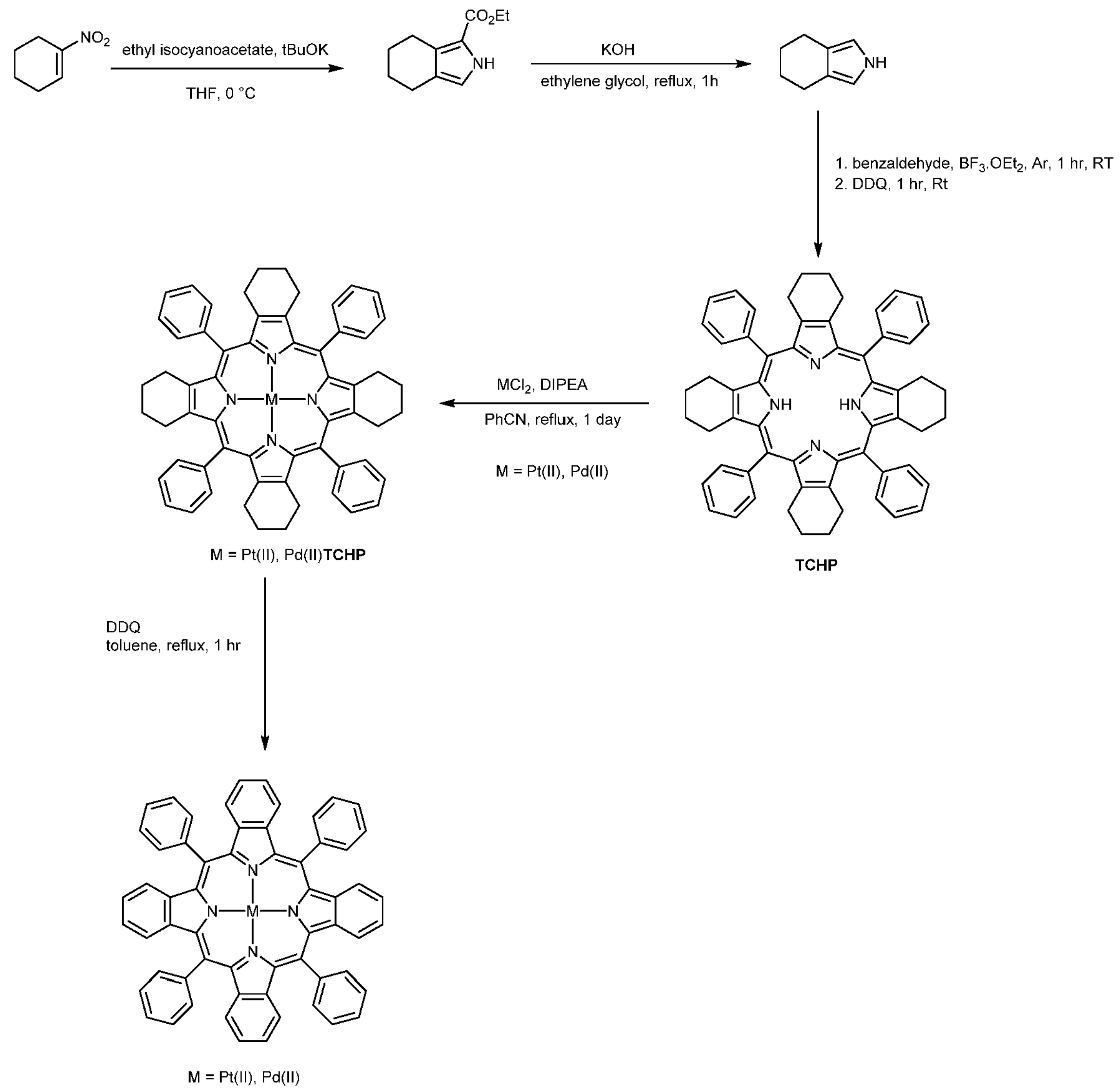


The tetracylcohexano porphyrin was prepared according to the procedure of Finikova *et* al https://pubs.acs.org/doi/10.1021/jo0350054

The tetracyclohexano porphyrin (TCHP) was then metallated with Pt(II) or Pd(II) using the same method as the tetraphenyl porphyrins but with an additional 2 mL of *N,N*-diisopropylethylamine as a strong base.

PtTCHP/PdTCHP 50 mg and 2,3-dichloro-5,6-dicyano-1,4-benzoquinone 200 mg was dissolved in toluene (65 mL) and heated to reflux temperature for 1 hour. The organic phase was then washed 3 times with ($Na_2SO_3$ 10% wt solution). The combined organic phases were then collected, and the solvent removed under reduced pressure. The green residue was then purified by column chromatography ($CHCl_3$ 100%). The resulting green residue was dissolved in a minimal amount of toluene and hexane added to precipitate out purple crystals which were collected and washed with hexane to afford PtTPTBP (32%) and PdTPTBP (56%) as purple crystals.

The NMR spectra for Compounds 10 and 11 are shown in Figure 1.

Preparation of fluoro/isopropyl/butyl (FIB) polymer

The FIB polymer was prepared by the following reaction:

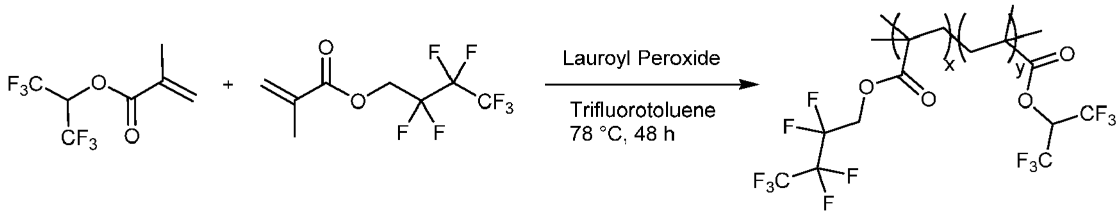


Hexafluoroisopropyl methacrylate (22.01 g, 93.24 mmol) and heptafluoro-n-butyl methacrylate (25 g, 93.24 mmol) were stirred with activated charcoal for 5 minutes and then filtered into three necked round bottomed flask equipped with a mechanical stirrer and a water cooled condenser. Trifluorotoluene (72 mL) and lauroyl peroxide (50 mg, 0.125 mmol) were then added and argon was bubbled through the solution for 1 hour. The reaction was then heated at 78 °C for 48 hours. Upon completion, trifluorotoluene (140 mL) was added. The diluted solution was then added dropwise to swirling hexane (1.2 L), precipitating out a white solid. The white solid was then collected and dried under vacuum to afford the FIB polymer as a white powder. The ratio of the monomers was found to be 38:62 isopropyl:butyl. $^1$H NMR (500 MHz, $CDCl_3$) $\delta$ = 6.44-6.26 (b, isopropyl-H), $\delta$ = 4.90-4.50 (b, butyl-H), $\delta$ = 2.83 (s, alkyl-H), $\delta$ = 2.83 (s, alkyl-H), $\delta$ = 2.80 (s, alkyl-H). 2.07 (p, $CH_3$). $^{19}$F NMR (500 MHz, $CDCl_3$) $\delta$ = -82.02 (b), $\delta$ = -120.63 (b), $\delta$ = -128.00 (b).

Polystyrene

The polystyrene was obtained from Sigma-Aldrich. For the polystyrene-based paint compositions comprising a compound of Formula I, the polystyrene used had a weight average molecular weight (Mw) of 192 000. For the polystyrene-based paint compositions used in Experiment 6 (utilising Compound 10, Compound 11, Comparative Compound 1 and Comparative Compound 2), the polystyrene used had a weight average molecular weight (Mw) of 350 000.

**Experiment 1 - emission**

The emission spectra of Compounds 1 to 9 and Comparative Compound 1 in chloroform were recorded. The emission spectra of all these compounds in deoxygenated chloroform are characteristic of typical metalloporphyrins, with two peaks at approximately 650 and 710 nm respectively. The peak maxima at 650 nm is attributed to the electronic origin of the emission from the $T_1$ state, denoted as $Q_{em}(0,0)$ and the peak centred at 710 nm is a vibronic satellite denoted as $Q_{em}(0,1)$.

The lifetimes of emission, $\tau_{(Ar)}$ and the quantum yield of emission, $\Phi_{(Ar)}$ were recorded in argon saturated solutions. These and the emission peak maxima are shown in Table 3 below.

Table 3

| Metalloporphyrin | $Q_{em}(0,0)$ maximum (nm) | $Q_{em}(0,1)$ maximum (nm) | Lifetime of emission in argon $\tau_{(Ar)}$ ($\mu$s) | Quantum yield of emission In argon $\Phi_{(Ar)}$ |
|---|---|---|---|---|
| Compound 1 | 665 | 729 | 45.3 | 0.046 |
| Compound 2 | 644 | 708 | 62.0 | 0.101 |
| Compound 3 | 645 | 714 | 46.9 | 0.038 |
| Compound 4 | 645 | 706 | 59.1 | 0.092 |
| Compound 5 | 650 | 704 | 50.0 | 0.091 |
| Comparative Compound 1 | 650 | 707 | 49.6 | 0.082 |
| Compound 6 | 643 | 712 | 46.0 | 0.055 |
| Compound 7 | 655 | 721 | 44.9 | 0.044 |
| Compound 8 | 646 | 709 | 71.9 | 0.117 |
| Compound 9 | 647 | 714 | 81.9 | 0.152 |

The quantum yield $\Phi$ is a measure of how much of the light of an absorbed compound is emitted, so a quantum yield of 0.152 would equate to15.2 % of the light absorbed being emitted. The quantum yield x molar absorption coefficient

(a measure of absorptivity) is used to calculate the brightness of emission of a compound. Therefore a higher quantum yield means a brighter emission. A bright emission is essential for pressure sensitive paint, as the brighter the emission the more signal the camera detects and the lower the signal to noise ratio - therefore the data is of better quality..

The emission spectra of PtTBTPP and PdTBTPP in chloroform were recorded. The emission spectra of all these compounds in deoxygenated chloroform are characteristic of typical tetrabenzoporphyrins, with two peaks at approximately 760 and 850 nm respectively. The peak maxima at 760 nm is attributed to the electronic origin of the emission from the $T_1$ state, denoted as Qem(0,0) and the peak centred at 850 nm is a vibronic satellite denoted as Qem(0,1). The lifetimes of emission, $\tau_{(Ar)}$ and the quantum yield of emission, $\Phi_{(Ar)}$ were recorded in argon saturated solutions. These and the emission peak maxima are shown in Table 3a below.

Table 3a

| Metalloporphyrin | $Q_{em}(0,0)$ maximum (nm) | $Q_{em}(0,1)$ maximum (nm) | Lifetime of emission in argon $\tau_{(Ar)}$ ($\mu$s) | Quantum yield of emission In argon $\Phi_{(Ar)}$ |
|---|---|---|---|---|
| Comparative Compound 2 (PdTFPP) | 670 | 740 | 547.1 | 0.047 |
| Compound 10 PtTBTPP | 760 | 850 | 50.4 | 0.550 |
| Compound 11 PdTBTPP | 775 | 865 | 264.5 | 0.182 |

Figure 2 shows the Emission spectra recorded for Compound 10 and that recorded for Comparative Compound 1. The emission for Compound 10 falls in the near infra-red region, whereas that for Comparative Compound 1 falls in the visible region. Thus, advantageously, Compound 10 could be used in combination with a second luminophore in a pressure sensitive paint where the second luminophore emits in the visible region. The quantum yield of Compound 10 (PtTBTPP) = 0.55. The quantum yield of PdTBTPP = 0.182. The quantum yield of PdTFPP = 0.047.

**Experiment 2 - polystyrene-based pressure sensitive paints**

Polystyrene-based pressure sensitive paint compositions comprising Compounds 1 to 9 and Comparative Compound 1 were formulated by adding 1 g of polystyrene to a solution of the metalloporphyrin at a concentration of 200 $\mu$M in 25 mL (37.25 g) of $CHCl_3$, and sonicating for 5 minutes to form a uniform solution. Each composition contains 5 $\mu$mol of metalloporphyrin. The amounts of the metalloporphyrins in the paint compositions are set out in in mg Table 4.

Table 4

| | Metalloporphyrin | mg |
|---|---|---|
| Example 1 | Compound 1 | 4.04 |
| Example 2 | Compound 2 | 4.76 |
| Example 3 | Compound 3 | 4.76 |
| Example 4 | Compound 4 | 5.11 |
| Example 5 | Compound 5 | 5.48 |
| Example 6 | Compound 6 | 6.76 |
| Example 7 | Compound 7 | 5.40 |
| Example 8 | Compound 8 | 5.09 |
| Example 9 | Compound 9 | 5.42 |
| Comparative Example 1 | Comparative Compound 1 | 5.84 |

In the above examples, the amount of metalloporphyrin present stated as a weight percentage based on the weight of the metalloporphyrin and the binder ranges from 0.4 wt % (Example 1) to 0.7 wt % (Example 6). The amount of solvent present in each of the examples stated as a weight percentage based on the weight of the metalloporphyrin, the binder and the solvent is 97.4 wt %.

Test models were prepared by precoating a model (aluminium square) with 3 light layers of Ambersil matt white RAL 9010. The pressure sensitive paint was then sprayed at a pressure of 1.5 bar from a spray gun. It was applied in 12 light coats with 2 minutes of drying time between each coat. The models were left to dry for 30 minutes after spraying was

completed.

The pressure sensitivity ($S_P$) of the pressure sensitive paints was investigated by measuring luminescence when the painted models are exposed to a range of pressures at a given temperature. It is desirable that a pressure sensitive paint has a high pressure sensitivity. The temperature sensitivity ($S_T$) was investigated by measuring luminescence when the painted models are exposed to a range of temperatures at a given pressure. It is desirable that a pressure sensitive paint has a low temperature sensitivity. The photodegradation of the pressure sensitive paints was measured by monitoring the luminescent intensity every 3 minutes during 45 minutes of constant irradiation and measuring the percentage change. It is desirable that a pressure sensitive paint has low photodegradation. The pressure sensitivity, temperature sensitivity and photodegradation results are shown in Tables 5, 6 and 7. The pressure sensitivity results for Comparative Example 1 are given in Figure 5.

Table 5: The pressure sensitivity, $S_p$ at 273, 293 and 313 K for the Pt(II) porphyrin polystyrene pressure sensitive paints with associated standard errors. These values were found from the gradient of the modified Stern-Volmer - calibrated plots at each temperature.

| Pressure sensitive paint | Pressure Sensitivity, $S_P$ | | |
|---|---|---|---|
| | 273 K | 293 K | 313 K |
| Example 1 | 0.592 ± 0.003 | 0.704 ± 0.004 | 0.877 ± 0.007 |
| Example 2 | 0.556 ± 0.005 | 0.699 ± 0.005 | 0.897 ± 0.007 |
| Example 3 | 0.583 ± 0.004 | 0.703 ± 0.004 | 0.901 ± 0.006 |
| Example 4 | 0.557 ± 0.004 | 0.691 ± 0.004 | 0.881 ± 0.007 |
| Example 5 | 0.507 ± 0.005 | 0.658 ± 0.006 | 0.877 ± 0.008 |
| Comparative Example 1 | 0.509 ± 0.004 | 0.693 ± 0.007 | 0.920 ± 0.009 |
| Example 6 | 0.619 ± 0.004 | 0.729 ± 0.005 | 0.894 ± 0.008 |
| Example 7 | 0.561 ± 0.003 | 0.739 ± 0.004 | 0.937 ± 0.006 |
| Example 8 | 0.548 ± 0.005 | 0.693 ± 0.006 | 0.894 ± 0.009 |
| Example 9 | 0.559 ± 0.005 | 0.714 ± 0.007 | 0.914 ± 0.008 |

Table 6: The temperature sensitivity, $S_T$ at 100 kPa for the Pt(II) porphyrin polystyrene pressure sensitive paints with associated standard errors. These values were found from the change in $I_{ref}/I$ across the 3 temperatures of the modified Stern-Volmer calibrated plots.

| Pressure sensitive paint | Temperature Sensitivity, $S_T$ at 100 kPa (%/K) |
|---|---|
| Example 1 | 0.89 ± 0.01 |
| Example 2 | 1.01 ± 0.08 |
| Example 3 | 0.92 ± 0.03 |
| Example 4 | 0.99 ± 0.04 |
| Example 5 | 1.11 ± 0.06 |
| Comparative Example 1 | 1.25 ± 0.03 |
| Example 6 | 0.75 ± 0.02 |
| Example 7 | 1.06 ± 0.04 |
| Example 8 | 0.99 ± 0.07 |
| Example 9 | 1.01 ± 0.06 |

Table 7: The photodegradation in terms of % reduction in intensity after 45 minutes of constant illumination at room temperature and pressure for the Pt(II) porphyrin polystyrene pressure sensitive paints.

| Pressure sensitive paint | Photodegradation after 45 mins (% of $I_0$ after 45 mins) |
|---|---|
| Example 1 | 1.8 |

(continued)

| Pressure sensitive paint | Photodegradation after 45 mins (% of $I_0$ after 45 mins) |
|---|---|
| Example 2 | 2.5 |
| Example 3 | 3.6 |
| Example 4 | 3.6 |
| Example 5 | 5.3 |
| Comparative Example 1 | 6.2 |
| Example 6 | 2.9 |
| Example 7 | 2.3 |
| Example 8 | 3.1 |
| Example 9 | 2.8 |

These results show that the choice of luminophore can have a significant impact on $S_T$. In particular, it can be seen increasing the fluorination of Pt(II) porphyrins can decrease $S_P$ and increase the $S_T$ of the pressure sensitive paint thus decreasing the overall performance of the pressure sensitive paint. Surprisingly, Comparative Compound 1 (PtTFPP), which is used widely in pressure sensitive paints, is one of the lower performing luminophores. Substitution of $CF_3$ groups in the meta position of the phenyl groups appears to have the greatest effect on the performance of the pressure sensitive paints, with Compound 6 having the highest $S_P$ and lowest $S_T$ of all the Pt(II) porphyrins.

**Experiment 3** - **FIB-based pressure sensitive paints**

FIB-based pressure sensitive paints comprising Compounds 6 and Comparative Compound 1 were formulated by adding 1g of FIB polymer to a solution of the metalloporphyrin at a concentration of 350 μM in 25 mL (29.75 g) of trifluoro toluene (TFT). The formulation was sonicated for 10 minutes to form a uniform suspension. Each composition contains 8.75 μmol of metalloporphyrin. The amounts of the metalloporphyrins in the paint compositions are set out in Table 8.

Table 8

| | Metalloporphyrin | (mg) |
|---|---|---|
| Example 10 | Compound 6 | 11.83 |
| Comparative Example 2 | Comparative Compound 1 | 10.22 |

In the above examples, the amount of metalloporphyrin present stated as a weight percentage based on the weight of the metalloporphyrin and the binder is 1.2 wt % (Example 10) and 1 wt % (Comparative Example 2). The amount of solvent present in each of the examples stated as a weight percentage based on the weight of the metalloporphyrin, the binder and the solvent is 96.7 wt %.

Test models were precoated with 3 light layers of ambersil matt white RAL 9010. The FIB paint was then sprayed at a pressure of 1.5 bar from a spray gun. It was applied in 12 light coats with 3 minutes of drying time between each coat. After application of the 12 coats, the paint is cured for 1 hour at 75 °C in an oven to reach the glass transition temperature of FIB.

The pressure sensitivity, temperature sensitivity and photodegradation results are shown in Table 9.

Table 9: Pressure sensitivity, temperature sensitivity and photodegradation after 45 minutes for the FIB-based pressures sensitive paints of Example 10 and Comparative Example 2 with associated standard errors.

| | Pressure Sensitivity, $S_P$ | | | Temperature Sensitivity, $S_T$ at 100 kPa (%/K) | Photodegradation after 45 mins (% of $I_0$ after 45 mins) |
|---|---|---|---|---|---|
| | 273 K | 293 K | 313 K | | |
| Comparative Example 2 | 0.672 ± 0.010 | 0.809 ± 0.010 | 1.030 ± 0.011 | 0.97 ± 0.10 | 4.6 |
| Example 10 | 0.785 ± 0.007 | 0.857 ± 0.006 | 0.977 ± 0.006 | 0.47 ± 0.09 | 1.8 |

These results show that the pressure sensitive paint of Example 10 outperforms that of Comparative Example 2 with respect to pressure sensitivity, temperature sensitivity and photodegradation. Further, the FIB-based pressure sensitive paints showed much better performance overall than their polystyrene-based counterparts, with increased $S_P$, decreased $S_T$ and decreased photodegradation. It is believed that this due to FIB having a higher permeability and it's heavily fluorinated polymer backbone, which makes it more photo oxidation resistant than hydrocarbon based polymers. Overall these results highlight that choice of luminophore can greatly affect paint performance with $S_P$(293 K) varying by 0.264 and $S_T$(100 kPa) by 1.05 %/K across the FIB-based pressure sensitive paints.

**Experiment 4 - Effect of polymer concentration**

FIB-based pressure sensitive paints comprising Compound 6 were formulated by adding varying amounts of FIB polymer to a solution of the metalloporphyrin at a concentration of 350 μM in 25 mL (29.75 g) of trifluoro toluene (TFT). 120 mg of $TiO_2$ (rutile and anatase nanopowder, <100 nm particle size) was then added and the formulation was sonicated for 10 minutes to form a uniform suspension. Each composition contains 8.75 μmol of metalloporphyrin. The amount of Compound 6 in each composition was 11.83 mg. The amounts of the FIB polymer in the paint compositions are set out in Table 10.

Table 10

| | Amount of FIB polymer (mg) |
|---|---|
| Example 11 | 1000 |
| Example 12 | 800 |
| Example 13 | 600 |
| Example 14 | 400 |
| Example 15 | 200 |

In the above examples, the amount of metalloporphyrin present stated as a weight percentage based on the weight of the metalloporphyrin and the binder is 1.2 wt % (Example 11), 1.5wt % (Example 12), 1.9 wt% (Example 13), 2.9 wt% (Example 14) and 5.6wt % (Example 15). The amount of solvent present in each of the examples stated as a weight percentage based on the weight of the metalloporphyrin, the binder and the solvent is 96.3 wt % (Example 11), 97.0 wt % (Example 12), 97.6 wt% (Example 13), 98.2 wt% (Example 14) and 98.9wt % (Example 15).

Test models were precoated with 3 light layers of Ambersil matt white RAL 9010. The FIB paint was then sprayed at a pressure of 1.5 bar from a spray gun. It was applied in 12 light coats with 3 minutes of drying time between each coat. After application of the 12 coats, the paint is cured for 1 hour at 75 °C in an oven to reach the glass transition temperature of FIB.

The pressure sensitivity, temperature sensitivity and photodegradation results are shown in Table 11 below

Table 11

| | Pressure Sensitivity, $S_P$ | | | Temperature Sensitivity, $S_T$ at 100 kPa (%/K) | Photodegradation after 45 mins (% of $I_0$ after 45 mins) |
|---|---|---|---|---|---|
| | 273 K | 293 K | 313 K | | |
| Example 11 | 0.760 ± 0.005 | 0.849 ± 0.005 | 0.961 ± 0.005 | 0.50 ± 0.03 | 1.7 |
| Example 12 | 0.807 ± 0.005 | 0.852 ± 0.005 | 0.907 ± 0.005 | 0.26 ± 0.01 | 2.4 |
| Example 13 | 0.772 ± 0.005 | 0.849 ± 0.005 | 0.934 ± 0.005 | 0.42 ± 0.02 | 2.6 |
| Example 14 | 0.748 ± 0.006 | 0.846 ± 0.006 | 0.959 ± 0.006 | 0.56 ± 0.01 | 2.8 |
| Example 15 | 0.647 ± 0.005 | 0.830 ± 0.006 | 1.018 ± 0.007 | 1.00 ± 0.01 | 4.0 |

The results show that, in particular, the temperature sensitivity and photodegradation differ significantly depending on the amount of polymer. The optimal FIB-polymer content appears to be 800 mg for this paint, with Example 12 showing the highest pressure sensitivity and an extremely low temperature sensitivity for a single luminophore polymer based pressure sensitive paint.

**Experiment 5 - Effect of luminophore concentration**

FIB-based pressure sensitive paints comprising Compound 6 were formulated by adding 800 mg of FIB polymer to a solution of the metalloporphyrin at a varying concentrations in 25 mL (29.75 g) of trifluorotoluene (TFT). 120 mg of $TiO_2$ (rutile and anatase nanopowder, <100 nm particle size) was then added and the formulation was sonicated for 10 minutes to form a uniform suspension. The amounts of Compound 6 in the paint compositions are set out in Table 12.

Table 12

| | Concentration of Compound 6 in 25 mL TFT (μM) | Amount of Compound 6 (mg) |
|---|---|---|
| Example 16 | 200 | 6.76 |
| Example 17 | 350 | 11.83 |
| Example 18 | 500 | 16.90 |
| Example 19 | 650 | 21.97 |
| Example 20 | 800 | 27.04 |

In the above examples, the amount of metalloporphyrin present stated as a weight percentage based on the weight of the metalloporphyrin and the binder is 0.8 wt % (Example 16), 1.5 wt % (Example 17), 2.1 wt% (Example 18), 2.7 wt% (Example 19) and 3.3 wt % (Example 20). The amount of solvent present in each of the examples stated as a weight percentage based on the weight of the metalloporphyrin, the binder and the solvent is 97.4 wt % (Example 16) and 97.3 for each of Examples 17 to 20.

Test models were precoated with 3 light layers of Ambersil matt white RAL 9010. The FIB paint was then sprayed at a pressure of 1.5 bar from a spray gun. It was applied in 12 light coats with 3 minutes of drying time between each coat. After application of the 12 coats, the paint is cured for 1 hour at 75 °C in an oven to reach the glass transition temperature of FIB.

The pressure sensitivity, temperature sensitivity and photodegradation results are shown in Table 13 below. The pressure sensitivity and temperature sensitivity results are shown for Example 20 in Figures 3 and 4, respectively.

Table 13: Average pressure sensitivity $S_P$, temperature sensitivity $S_T$ and photodegradation after 45 minutes for the decreasing amount of Compound 6 with associated standard errors. The average is across 3 separately made paint formulations to account for weighing errors.

| | Pressure Sensitivity, $S_P$ | | | Temperature Sensitivity, $S_T$ at 100 kPa (%/K) | Photodegradation after 45 mins (% of $I_0$ after 45 mins) |
|---|---|---|---|---|---|
| | 273 K | 293 K | 313 K | | |
| Example 16 | 0.767 ± 0.008 | 0.827 ± 0.008 | 0.888 ± 0.008 | 0.31 ± 0.01 | 2.8 |
| Example 17 | 0.807 ± 0.005 | 0.852 ± 0.005 | 0.907 ± 0.005 | 0.26 ± 0.01 | 2.4 |
| Example 18 | 0.769 ± 0.008 | 0.820 ± 0.008 | 0.880 ± 0.008 | 0.29 ± 0.01 | 3.1 |
| Example 19 | 0.781 ± 0.009 | 0.833 ± 0.009 | 0.892 ± 0.009 | 0.23 ± 0.02 | 2.7 |
| Example 20 | 0.803 ± 0.006 | 0.846 ± 0.006 | 0.894 ± 0.006 | 0.22 ± 0.01 | 3.1 |

The results show that the luminophore content has a small effect on $S_T$ but no significant effect on $S_F$ and photodegradation. Overall, the optimal luminophore content for this paint seems to be 27.04 mg (Example 20) with a very low $S_T$.

**Experiment 6 - polystyrene-based pressure sensitive paints**

Polystyrene-based pressure sensitive paints comprising Compound 10 (PtTBTBP), Compound 11 (PdTPTBP), Comparative Compound 1 and Comparative Compound 2 (PdTFPP) were formulated by adding 1 g of polystyrene to a solution at a concentration of 350 μM for the benzoporphyrins and 200 μM for PdTFPP in 25 mL (37.25 g) of $CHCl_3$, and sonicating for 5 minutes to form a uniform solution. The amounts of the metalloporphyrins in the paint compositions are set out in Table 14.

Table 14

| | Metalloporphyrin (mg) | |
|---|---|---|
| Example 21 | Compound 10 | 8.82 |
| Example 22 | Compound 11 | 8.04 |
| Comparative Example 3 | Comparative Compound 2 | 5.39 |
| Comparative Example 4 | Comparative Compound 1 | 5.84 |

The amount of metalloporphyrin present stated as a weight percentage based on the weight of the metalloporphyrin and the binder is 0.9 wt % (Example 21) and 0.8 wt % (Example 22). The amount of solvent present in each of the examples stated as a weight percentage based on the weight of the metalloporphyrin, the binder and the solvent is 97.3 wt %.

Test models (aluminium squares) were precoated with 3 light layers of Ambersil matt white RAL 9010. The pressure sensitive paint was then sprayed at a pressure of 1.5 bar from a spray gun. It was applied in 12 light coats with 2 minutes of drying time between each coat.

The pressure sensitivity results for Comparative Example 4 and Example 21 are shown in Figures 6 and 7, respectively. The photodegradation results for Comparative Example 4 and Example 21 are shown in Figure 8. The pressure sensitivity results for Comparative Example 3 and Example 22 are shown in Figures 9 and 10, respectively. The photodegradation results for Comparative Example 3 and Example 22 are shown in Figure 11.

The calibration luminescence response to pressure plot of Example 21 (Figure 7) is more linear and less spread out than that for Comparative Example 7 (Figure 6). The paint composition of Example 21 has the desirable properties of pressure sensitivity @ 20 °C = 0.745 and temperature sensitivity @ 100 kPa = 1.28 %/°C when compared to the pressure sensitivity @ 20 °C = 0.66 and temperature sensitivity @ 100 kPa = 1.55 %/°C of Comparative Example 4. The $\Phi$ of Compound 10 = 0.55 is greater than the $\Phi$ of Comparative Compound 1 = 0.082 by a factor of 6.7.

Comparison of the photodegradation results for Comparative Example 4 and Example 21 given in Figure 8, shows that Example 21 is more photo oxidation resistant than Comparative Example 4, losing only 3.8% intensity over 1 hour compared to 7.6% intensity for Comparative Example 1

Comparison of the performance of Example 22 and Comparative Example 3 can be made looking at Figures 9 to 11. It can be seen that the calibration luminescence response to pressure plot of Example 22 (Figure 10) is less spread out than that for Comparative Example 3 (Figure 9). Example 22 has the desirable properties of pressure sensitivity @ 20 °C = 0.842 and temperature sensitivity @ 100 kPa = 1.33 %/°C when compared to PdTFPP pressure sensitivity @ 20 °C = 0.9131 and temperature sensitivity @ 100 kPa = 1.71 %/°C of Comparative Example 3. The $\Phi$ of Compound 11 = 0.182 is greater than the $\Phi$ of Comparative Example 3 = 0.047 by a factor of 3.87. This is surprising as typically Pd porphyrins are considered to be too temperature sensitive and not bright enough for pressure sensitive paints.

Comparison of the photodegradation results for Comparative Example 3 and Example 22 can be made from Figure 11. It can be seen that Example 22 is less photo oxidation resistant than Comparison Example 3, losing 7.6% intensity over 1 hour compared to 6.8% intensity for Comparison Example 3.

The benzoporphryins of Formula II have been found to be very bright emitters, in particular when compared to both the porphyrins of Formula I and those of Comparative Compounds 1 and 2.

The invention is further described by way of the following numbered clauses.

Clause 1: A pressure sensitive paint composition comprising:

(a) a metalloporphyrin of Formula I or Formula II,

where Formula I is

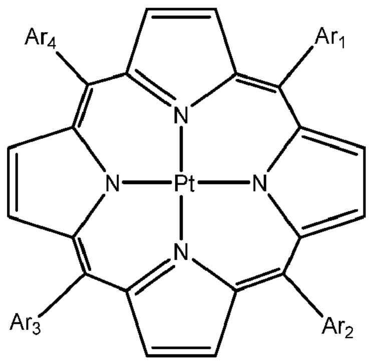

wherein each of $Ar_1$, $Ar_2$, $Ar_3$ and $Ar_4$ is independently a phenyl group optionally substituted with up to four substituents selected from halo and $CF_3$,
and Formula II is

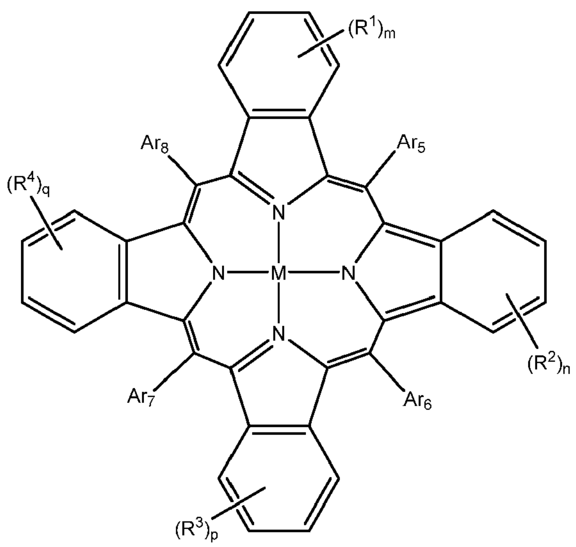

wherein M is Zn, Pt (II) or Pd(II); each of $Ar_5$, $Ar_6$, $Ar_7$ and $Ar_8$ is independently selected from:

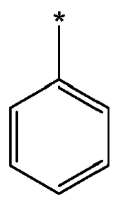

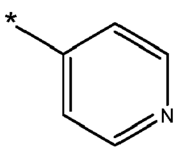

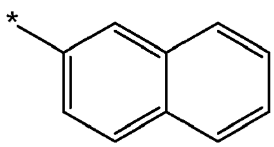

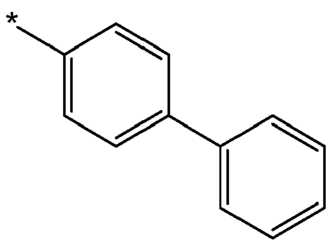

and is optionally substituted with halo, hydroxyl or carboxylate with the proviso that there is no substitution at a position in a ring *ortho* to the carbon directly attached to a point of attachment, where * is a point of attachment;
each of $R^1$, $R^2$, $R^3$ and $R^4$ is independently selected from halo;
and each of m, n, p and q is from 0 to 2; and

(b) an oxygen-permeable binder.

Clause 2: The composition according to clause 1, wherein each of $Ar_1$, $Ar_2$, $Ar_3$ and $Ar_4$ is independently selected from:

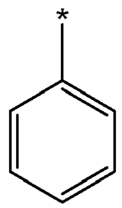 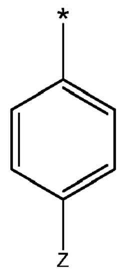 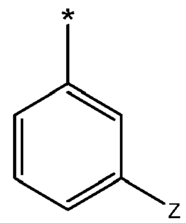 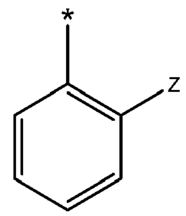

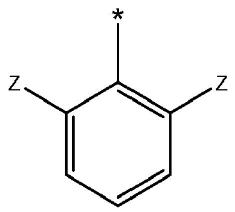 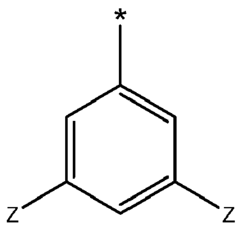 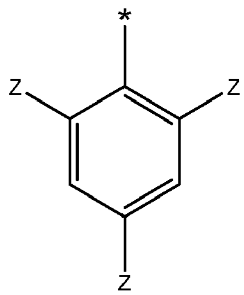 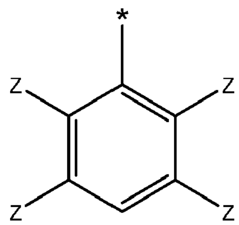

where each Z is independently selected from halo and $CF_3$.

Clause 4: The composition according to any one of the preceding clauses, wherein for Formula I, halo is F or Cl.

Clause 5: The composition according to any one of the preceding clauses, wherein each of $Ar_1$, $Ar_2$, $Ar_3$ and $Ar_4$ is independently selected from:

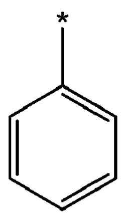 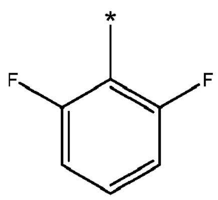 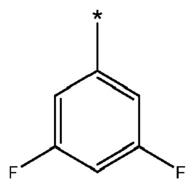 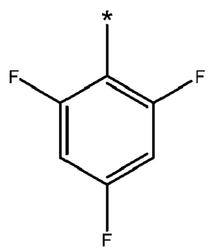 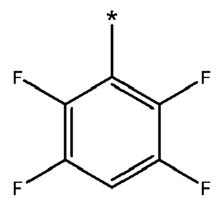

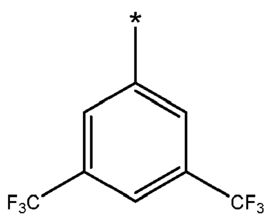 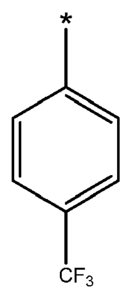 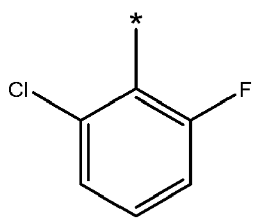 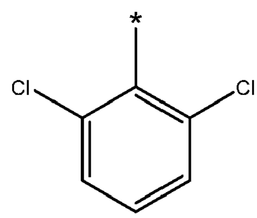 .

Clause 6: The composition according to any one of the preceding clauses, wherein each of $Ar_1$, $Ar_2$, $Ar_3$ and $Ar_4$ is the same.

Clause 7: The composition according to any one of the preceding clauses, wherein for Formula I, each of $Ar_1$, $Ar_2$, $Ar_3$ and $Ar_4$ comprises two substituents independently selected from halo and $CF_3$

Clause 8: The composition according to clause 1, wherein each of $Ar_5$, $Ar_6$, $Ar_7$ and $Ar_8$ is the same.

Clause 9: The composition according to clause 1 or clause 8, wherein each of $Ar_5$, $Ar_6$, $Ar_7$ and $Ar_8$ is

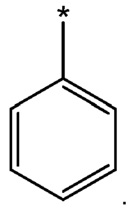

Clause 10: The composition according to any one of clause 1, clause 8 or clause 9, wherein each of m, n, p and q is zero.

Clause 11: The composition according to clause 1, wherein the metalloporphyrin is selected from the following compounds:

| Compound | Structure |
|---|---|
| 1 | 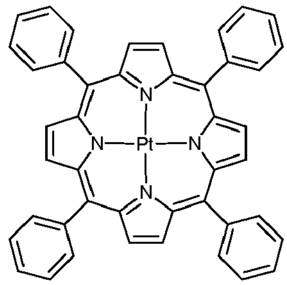 |
| 2 | 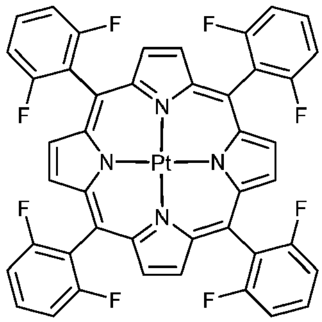 |
| 3 | 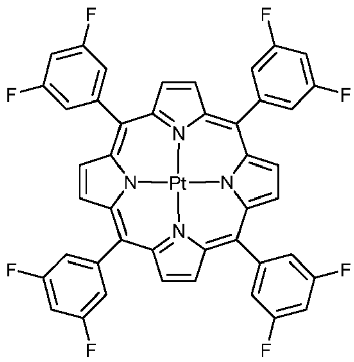 |
| 4 | 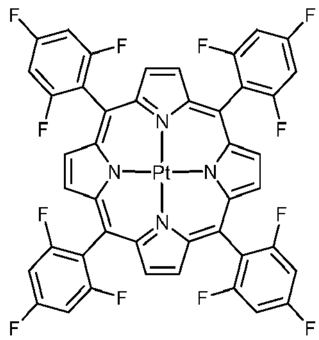 |

(continued)

| Compound | Structure |
|---|---|
| 5 | 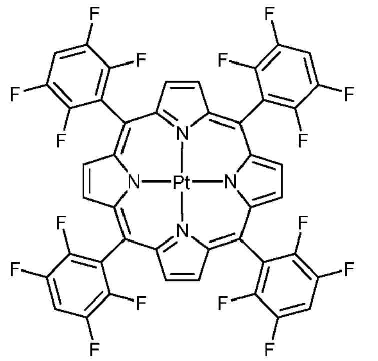 |
| 6 | 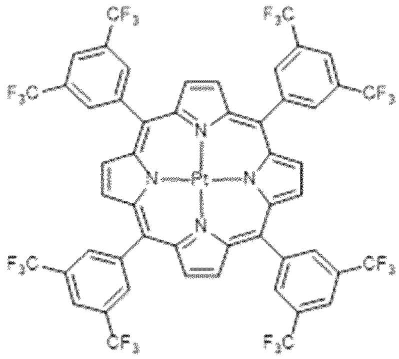 |
| 7 | 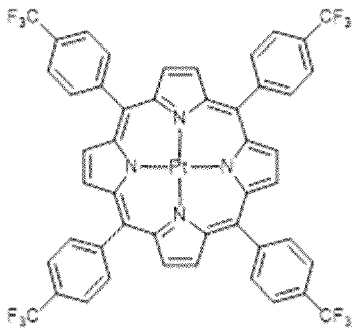 |
| 8 | 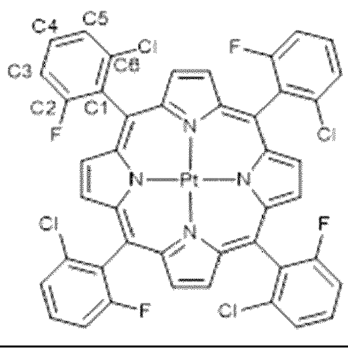 |

(continued)

| Compound | Structure |
|---|---|
| 9 | 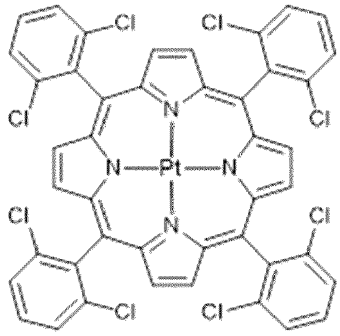 |
| 10 | 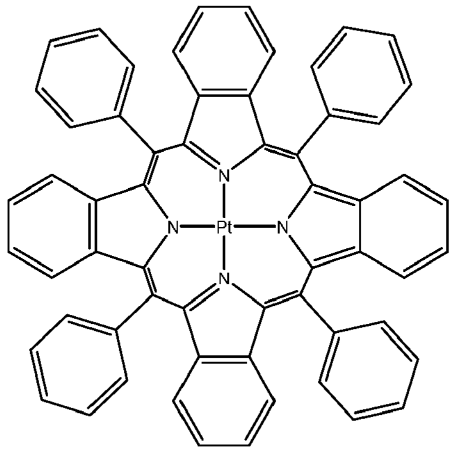 |
| 11 | 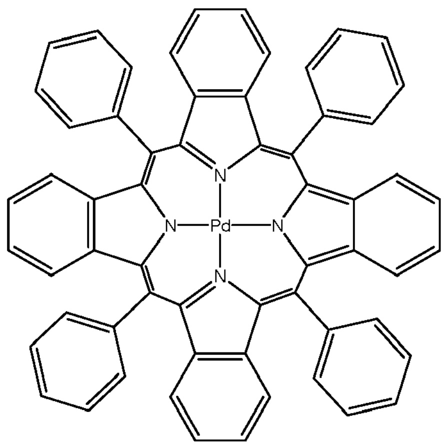 |

Clause 12: The composition according to any one of clauses 1 to 6, wherein the metalloporphyrin is selected from Compound 1, Compound 2, Compound 3, Compound 4, Compound 5, Compound 6, Compound 7, Compound 8 and Compound 9.

Clause 13: The composition according to clause 12, wherein the metalloporphyrin is selected from Compound 2, Compound 6 and Compound 9.

Clause 14: The composition according to clause 13, wherein the metalloporphyrin is Compound 6.

Clause 15: The composition according to any one of the preceding clauses, wherein the oxygen-permeable binder is one or more oxygen-permeable polymer.

Clause 16: The composition according to clause 15, wherein each one or more oxygen-permeable polymer is selected from polystyrene, poly(trimethylsilylpropyne), silicone, polyisobutylmethacrylate and fluoropolymers.

Clause 17: The composition according to any one of the preceding clauses, wherein the oxygen permeable polymer is a fluoropolymer prepared from the following monomers:

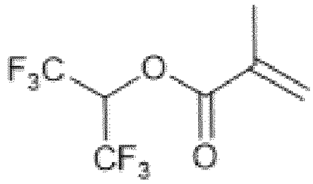 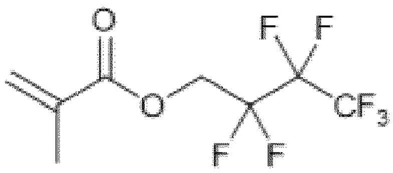.

Clause 18: The composition according to any one of the preceding clauses, further comprising ceramic particles.
Clause 19: The composition according to any one of the preceding clauses, wherein the metalloporphyrin of Formula I or Formula II is present in an amount of at least 0.1 wt % or at least 0.3 wt % or from 0.1 to 20 or 25 wt %, or from 0.2 to 15 wt% or from 0.3 to 13 wt %, based on the weight of the metalloporphyrin and the oxygen-permeable binder.
Clause 20: The composition according to clause 19, wherein the metalloporphyrin is present in an amount of 2.9 to 3.7 wt % based on the weight of the metalloporphyrin and the oxygen-permeable binder.
Clause 21: The composition according to any one of the preceding clauses, further comprising a solvent.
Clause 22: The composition according to clause 21, comprising from 85 or 95 to 99.8 wt% of solvent; 0.2 to 5 wt% of the metalloporphyrin and oxygen-permeable binder combined; up to about 12 or 14 wt % ceramic particles and up to 0.6 wt % of other additives, such as $TiO_2$, wherein the total wt % of these components is 100.
Clause 23: The composition according to clause 21, comprising from 95 to 99.8 wt% of solvent; 0.2 to 5 wt% of the metalloporphyrin and oxygen-permeable binder combined; and up to 0.6 wt % of other additives, wherein the total wt% of the solvent, the metalloporphyrin and oxygen-permeable binder combined and the other additives is 100 wt %.
Clause 24: The composition according to clause 22 or clause 23, wherein the metalloporphyrin and oxygen-permeable binder combined is present in an amount of 2.6 to 2.8 wt %
Clause 25: The composition according to clause 23, comprising about 8 to 12 wt % ceramic particles; about 0.6 to 1.4 wt % of the metalloporphyrin and oxygen-permeable binder combined; and about 85 to 94 wt % of solvent, wherein the total wt% of these components is 100 wt %.
Clause 26: The composition according to clause 25, comprising 9.6 to 9.7 wt % ceramic particles; about 0.83 to 1.24 wt % of the metalloporphyrin and oxygen-permeable binder combined; and about 89.1 to 89.5 wt % of solvent, wherein the total wt% of these components is 100 wt %
Clause 27: A method of conducting a determination of a pressure distribution at a surface of a test model, comprising the steps of: obtaining a test model which has a surface coated with a pressure sensitive paint composition according to any one of clauses 1 to 26; illuminating the coated surface; and measuring the intensity of light emitted from the coated surface.
Clause 28: The method of clause 27, wherein the step of obtaining a test model which has a surface coated with a pressure sensitive paint composition according to any one of clauses 1 to 26 comprises applying to a surface of a test model.
Clause 29: The method of clause 27 or clause 28, wherein the steps of illuminating the coated surface and measuring the intensity of light emitted from the coated surface are carried out while the test model is subjected to airflow in a wind tunnel.

**Claims**

**1.** A pressure sensitive paint composition comprising:

(a) a metalloporphyrin of Formula I or Formula II,

where Formula I is

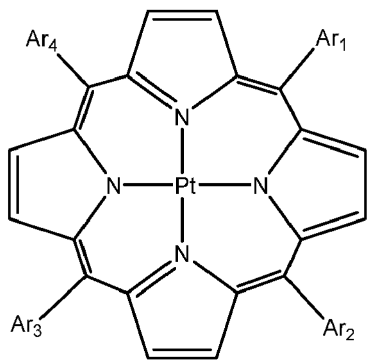

wherein each of $Ar_1$, $Ar_2$, $Ar_3$ and $Ar_4$ is independently a phenyl group optionally substituted with up to four substituents selected from halo and $CF_3$, and
Formula II is

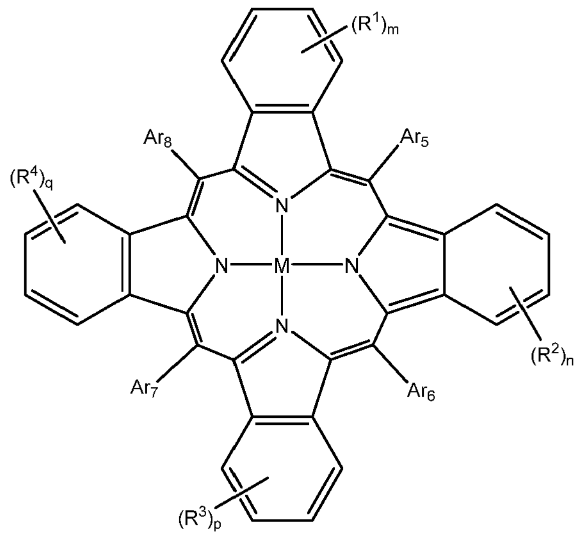

wherein M is Zn, Pt (II) or Pd(II); each of $Ar_5$, $Ar_6$, $Ar_7$ and $Ar_8$ is independently selected from:

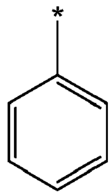
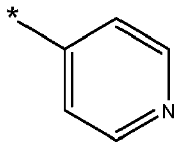
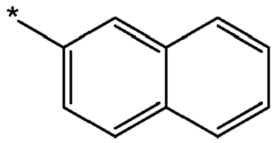
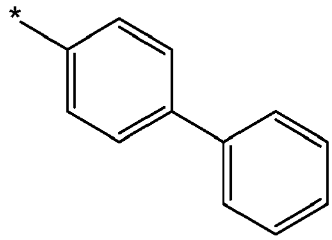

and is optionally substituted with halo, hydroxyl or carboxylate with the proviso that there is no substitution at a position in a ring *ortho* to the carbon directly attached to a point of attachment, where * is a point of attachment; each of $R^1$, $R^2$, $R^3$ and $R^4$ is independently selected from halo; and each of m, n, p and q is from 0 to 2; and

(b) an oxygen-permeable binder.

**2.** The composition according to claim 1, wherein each of $Ar_1$, $Ar_2$, $Ar_3$ and $Ar_4$ is independently selected from:

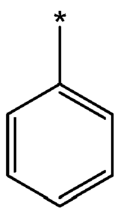
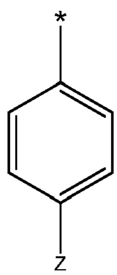
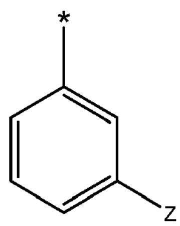
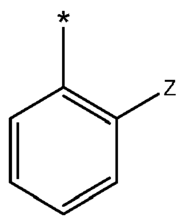

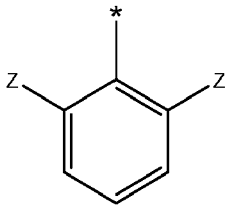 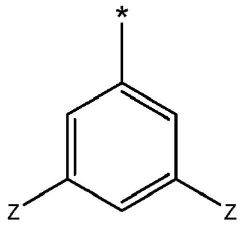 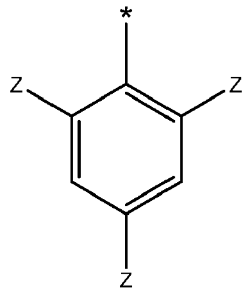 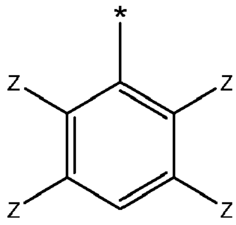

where each Z is independently selected from halo and $CF_3$, or each Z is independently selected from F, Cl and $CF_3$.

3. The composition according to any one of the preceding claims, wherein each of $Ar_1$, $Ar_2$, $Ar_3$ and $Ar_4$ is independently selected from:

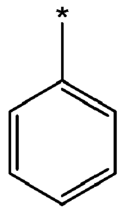 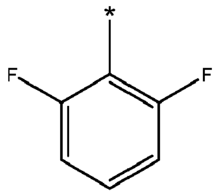 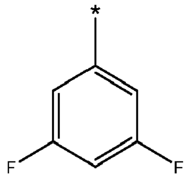 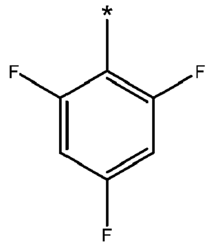 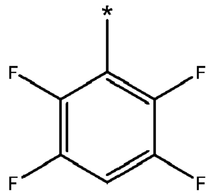

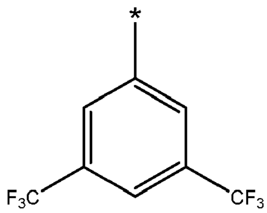 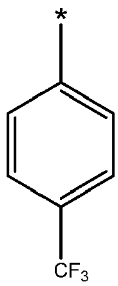 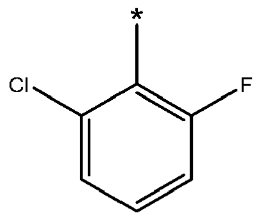 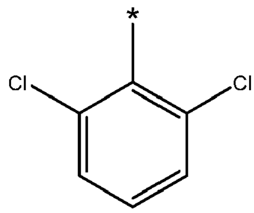 .

4. The composition according to any one of the preceding claims, wherein each of $Ar_1$, $Ar_2$, $Ar_3$ and $Ar_4$ is the same.

5. The composition according to any one of the preceding claims, wherein for Formula I, each of $Ar_1$, $Ar_2$, $Ar_3$ and $Ar_4$ comprises two substituents independently selected from halo and $CF_3$

6. The composition according to claim 1, wherein each of $Ar_5$, $Ar_6$, $Ar_7$ and $Ar_8$ is the same, and/or wherein each of $Ar_5$, $Ar_6$, $Ar_7$ and $Ar_8$ is

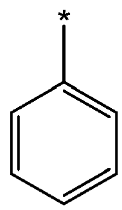 .

7. The composition according to claim 6, wherein each of m, n, p and q is zero.

8. The composition according to claim 1, wherein the metalloporphyrin is selected from the following compounds:

| Compound | Structure |
|---|---|
| 1 | 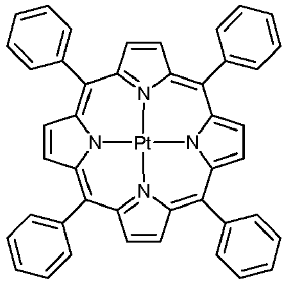 |
| 2 | 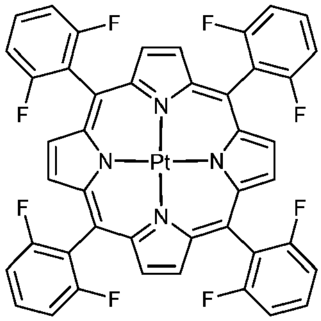 |
| 3 | 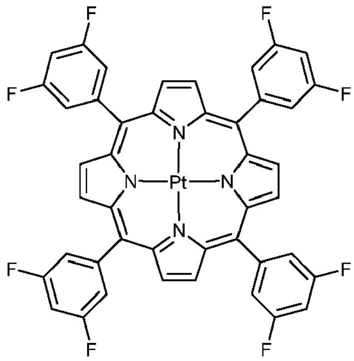 |
| 4 | 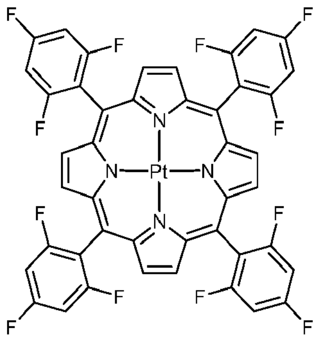 |
| 5 | 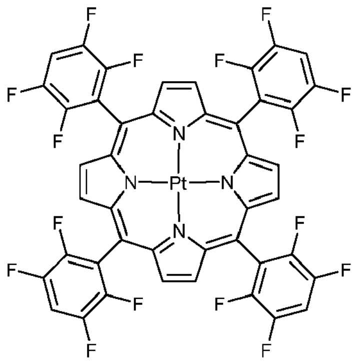 |

(continued)

| Compound | Structure |
|---|---|
| 6 | 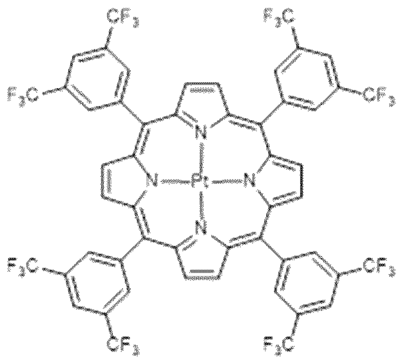 |
| 7 | 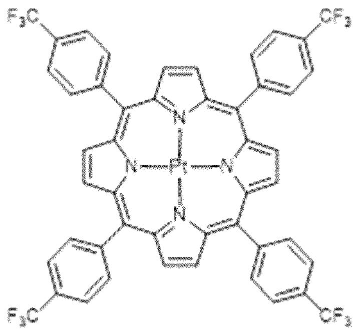 |
| 8 | 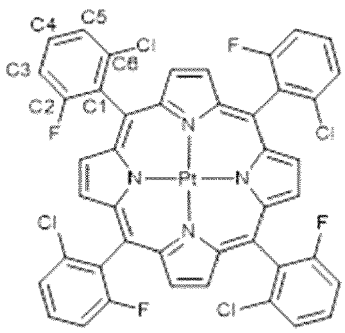 |
| 9 | 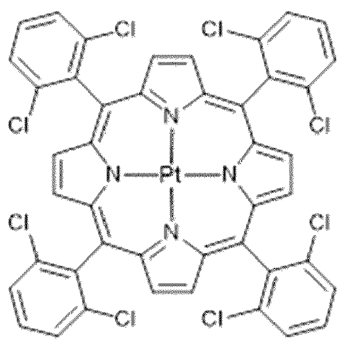 |

(continued)

| Compound | Structure |
|---|---|
| 10 | 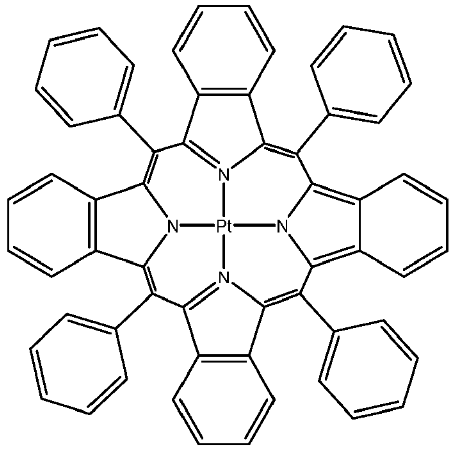 |
| 11 | 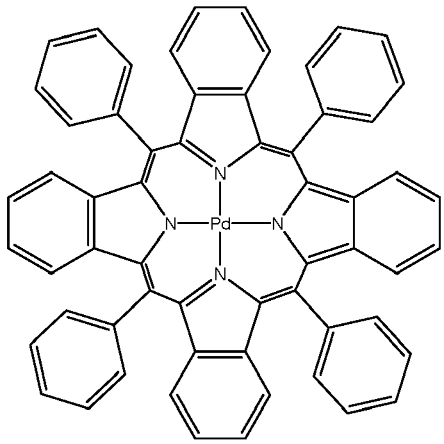 |

9. The composition according to any one of the preceding claims, wherein the oxygen-permeable binder is one or more oxygen-permeable polymer.

10. The composition according to claim 9, wherein each one or more oxygen-permeable polymer is selected from polystyrene, poly(trimethylsilylpropyne), silicone, polyisobutylmethacrylate and fluoropolymers; or wherein the oxygen permeable polymer is a fluoropolymer prepared from the following monomers:

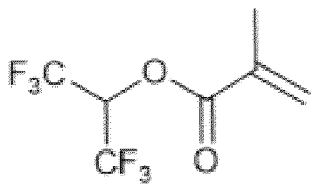 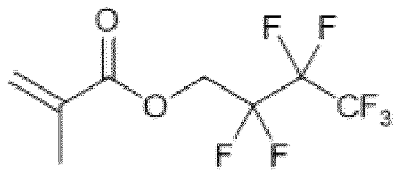

.

11. The composition according to any one of the preceding claims, further comprising ceramic particles.

12. The composition according to any one of the preceding claims, wherein the metalloporphyrin of Formula I or Formula II is present in an amount of at least 0.1 wt % or at least 0.3 wt % or from 0.1 to 20 or 25 wt %, or from 0.2 to 15 wt% or from 0.3 to 13 wt %, based on the weight of the metalloporphyrin and the oxygen-permeable binder.

13. The composition according to any one of the preceding claims, further comprising a solvent.

14. The composition according to claim 21, comprising from 85 or 95 to 99.8 wt% of solvent; 0.2 to 5 wt% of the

metalloporphyrin and oxygen-permeable binder combined; up to about 12 or 14 wt % ceramic particles and up to 0.6 wt % of other additives, such as $TiO_2$, wherein the total wt % of these components is 100.

**15.** A method of conducting a determination of a pressure distribution at a surface of a test model, comprising the steps of: obtaining a test model which has a surface coated with a pressure sensitive paint composition according to any one of claims 1 to 14; illuminating the coated surface; and measuring the intensity of light emitted from the coated surface.

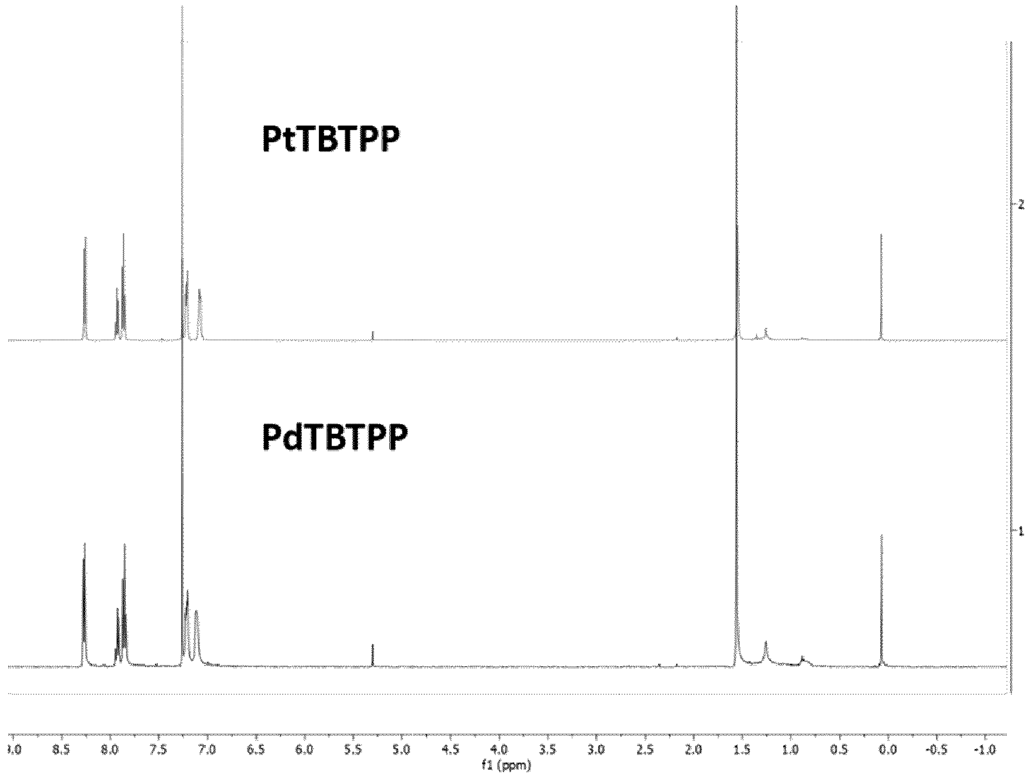
PtTBTPP
PdTBTPP
2
1
8.0
8.5
8.0
7.5
7.0
6.5
6.0
5.5
5.0
4.5
4.0
3.5
3.0
2.5
2.0
1.5
1.0
0.5
0.0
-0.5
-1.0
f1 (ppm)

Fig.1

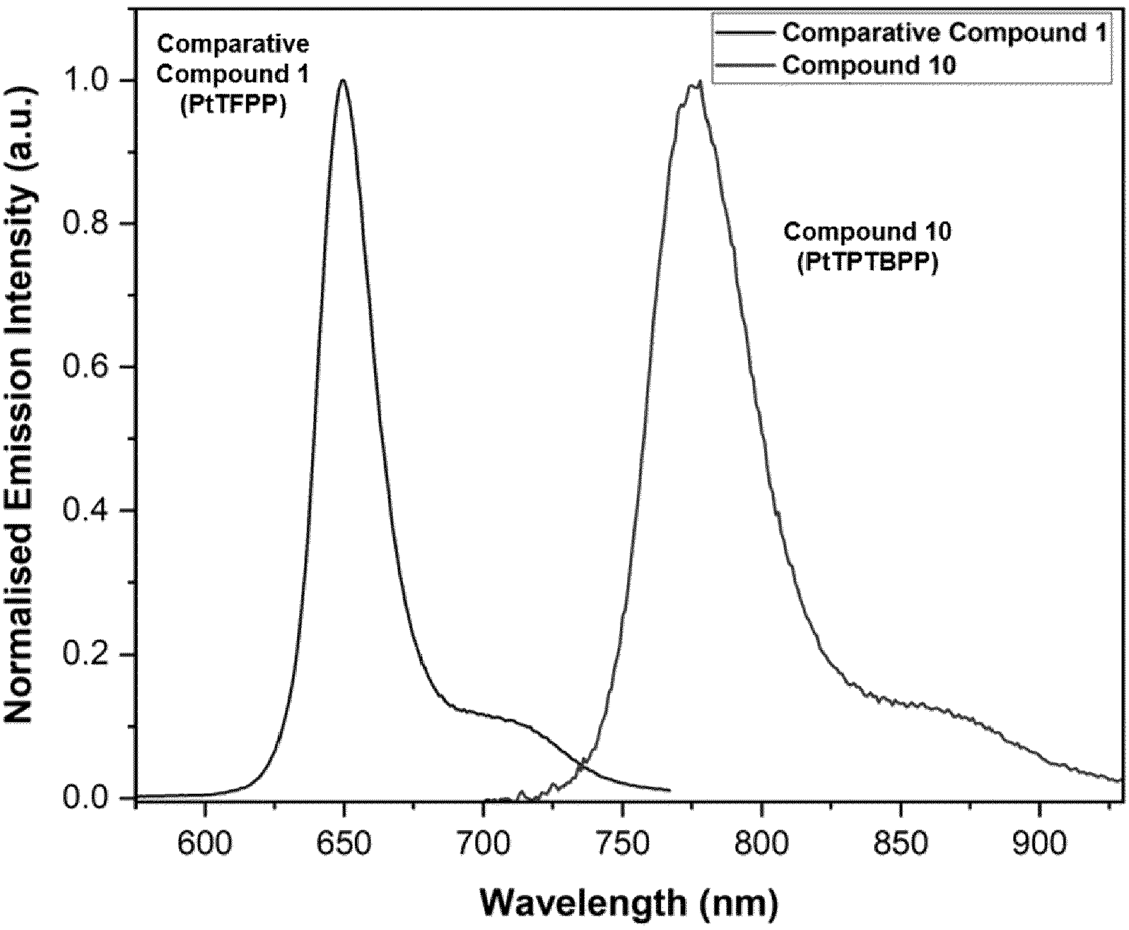
Comparative
Compound 1
(PtTFPP)
Comparative Compound 1
Compound 10
Compound 10
(PtTPTBPP)
Normalised Emission Intensity (a.u.)
0.0
0.2
0.4
0.6
0.8
1.0
600
650
700
750
800
850
900
Wavelength (nm)

Fig.2

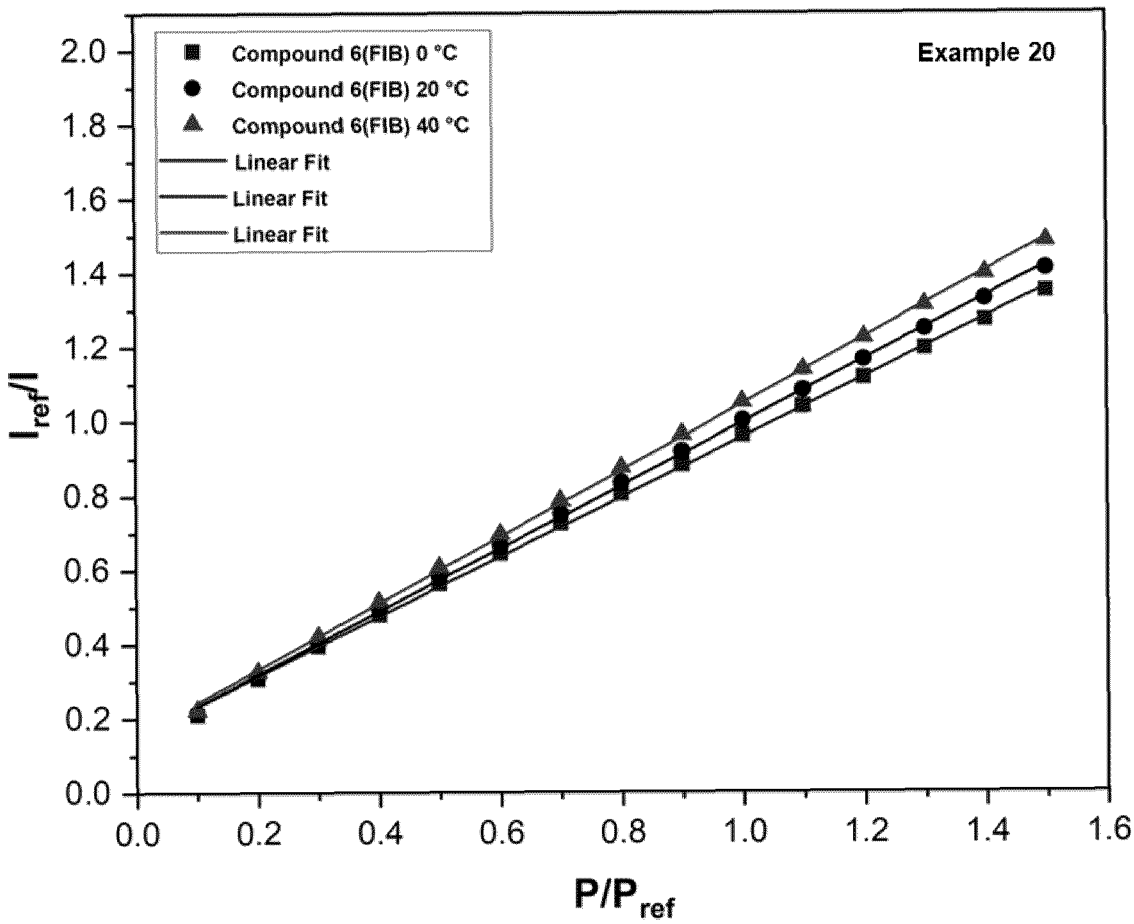
Compound 6(FIB) 0 °C
Compound 6(FIB) 20 °C
Compound 6(FIB) 40 °C
Linear Fit
Linear Fit
Linear Fit
Example 20
$I_{ref}/I$
$P/P_{ref}$
0.0
0.2
0.4
0.6
0.8
1.0
1.2
1.4
1.6
1.8
2.0

Fig.3

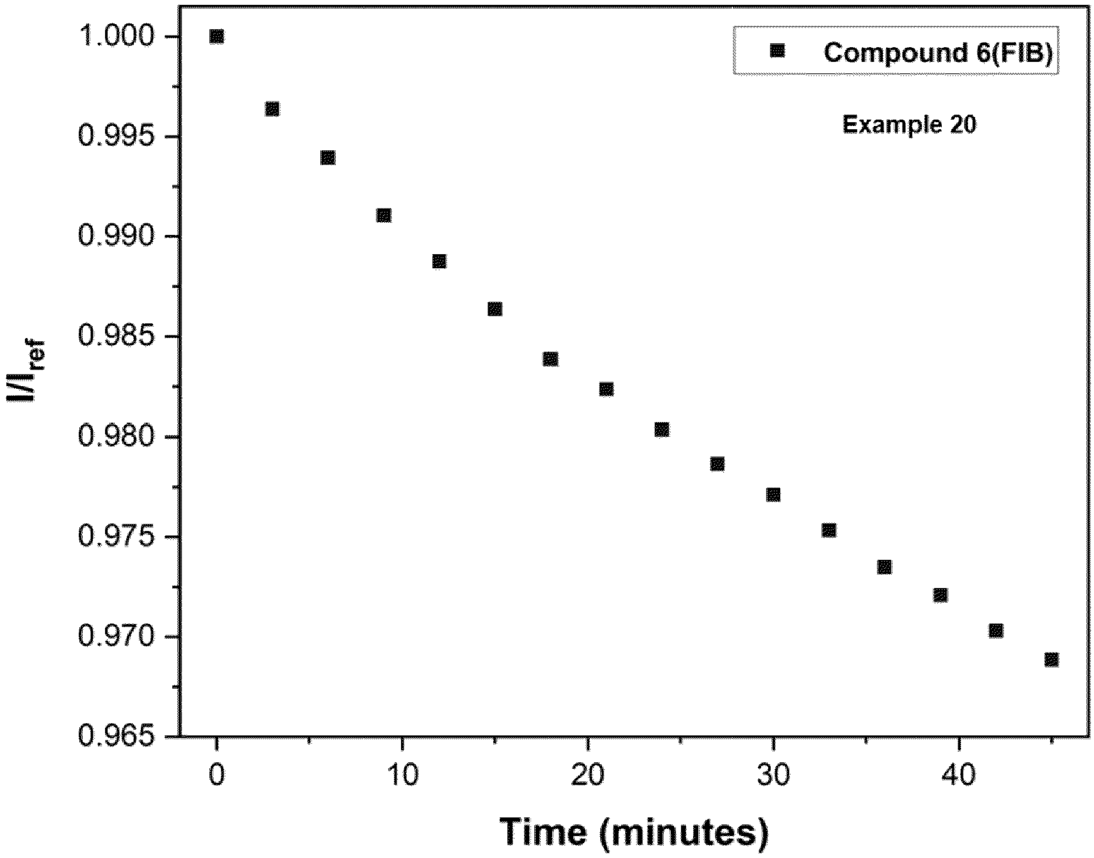
1.000
0.995
0.990
0.985
0.980
0.975
0.970
0.965
$I/I_{ref}$
0
10
20
30
40
Time (minutes)
Compound 6(FIB)
Example 20

Fig.4

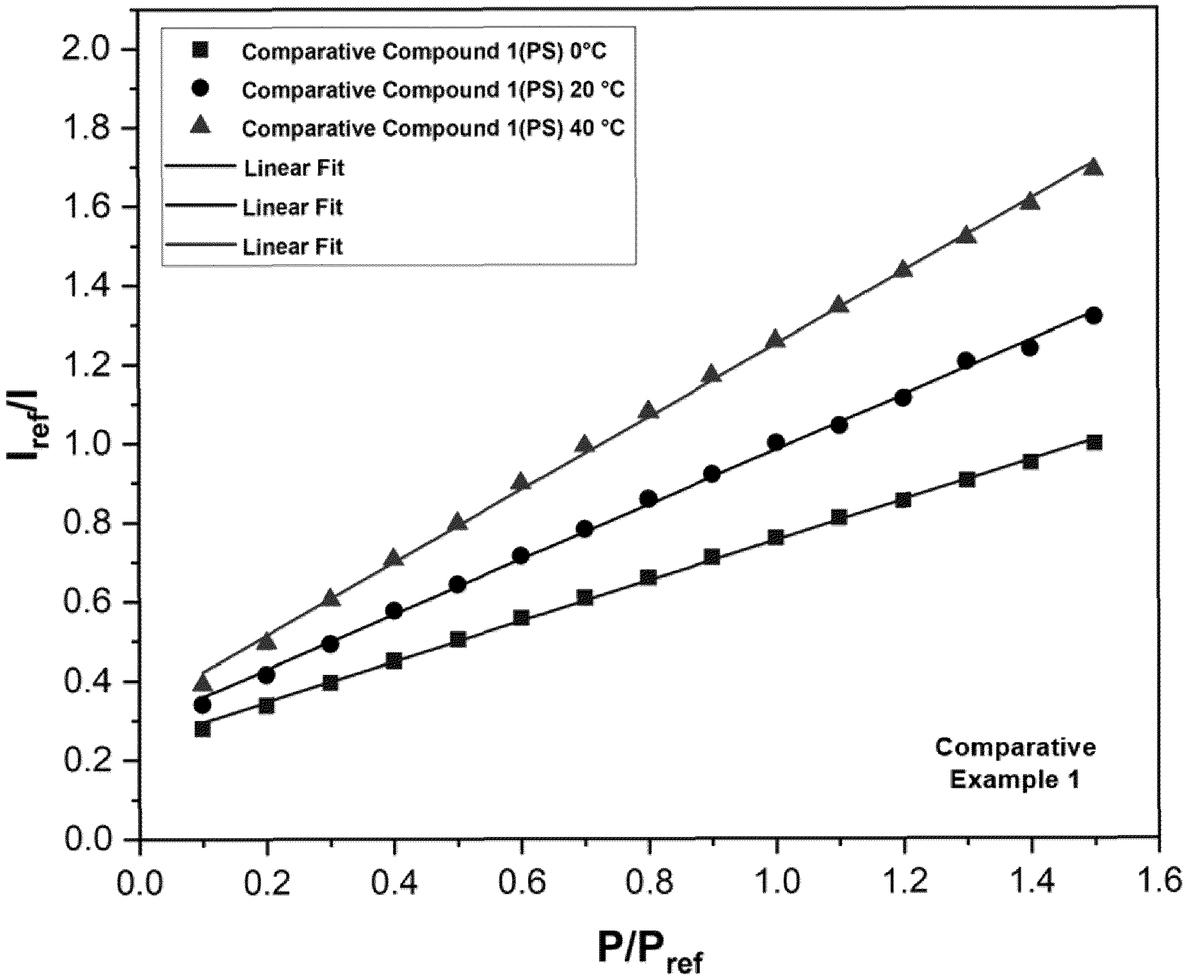
Comparative Compound 1(PS) 0°C
Comparative Compound 1(PS) 20 °C
Comparative Compound 1(PS) 40 °C
Linear Fit
Linear Fit
Linear Fit
Comparative Example 1
$I_{ref}/I$
$P/P_{ref}$
0.0
0.2
0.4
0.6
0.8
1.0
1.2
1.4
1.6
1.8
2.0

Fig.5

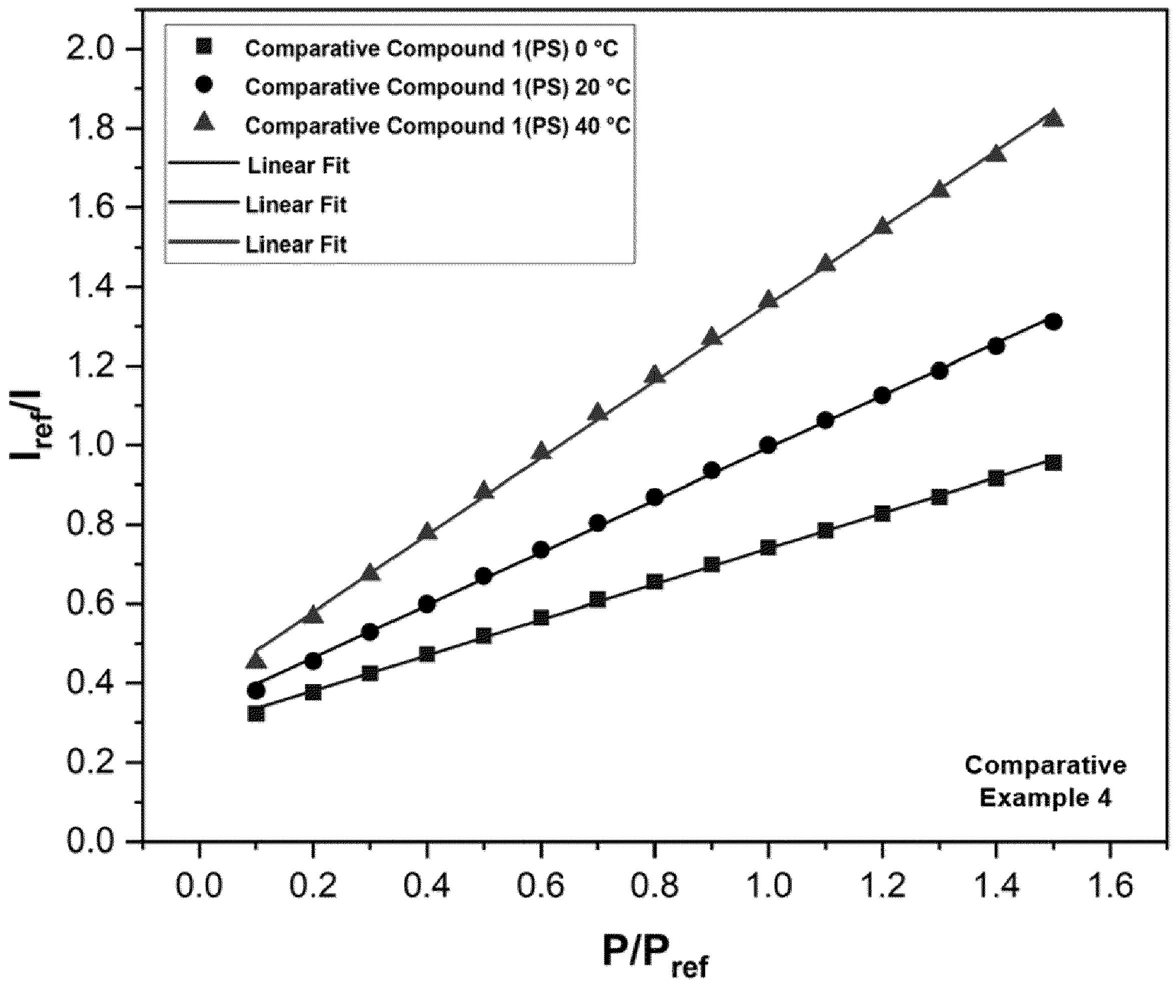
Comparative Compound 1(PS) 0 °C
Comparative Compound 1(PS) 20 °C
Comparative Compound 1(PS) 40 °C
Linear Fit
Linear Fit
Linear Fit
Comparative Example 4
$I_{ref}/I$
$P/P_{ref}$
2.0
1.8
1.6
1.4
1.2
1.0
0.8
0.6
0.4
0.2
0.0
0.0
0.2
0.4
0.6
0.8
1.0
1.2
1.4
1.6

Fig.6

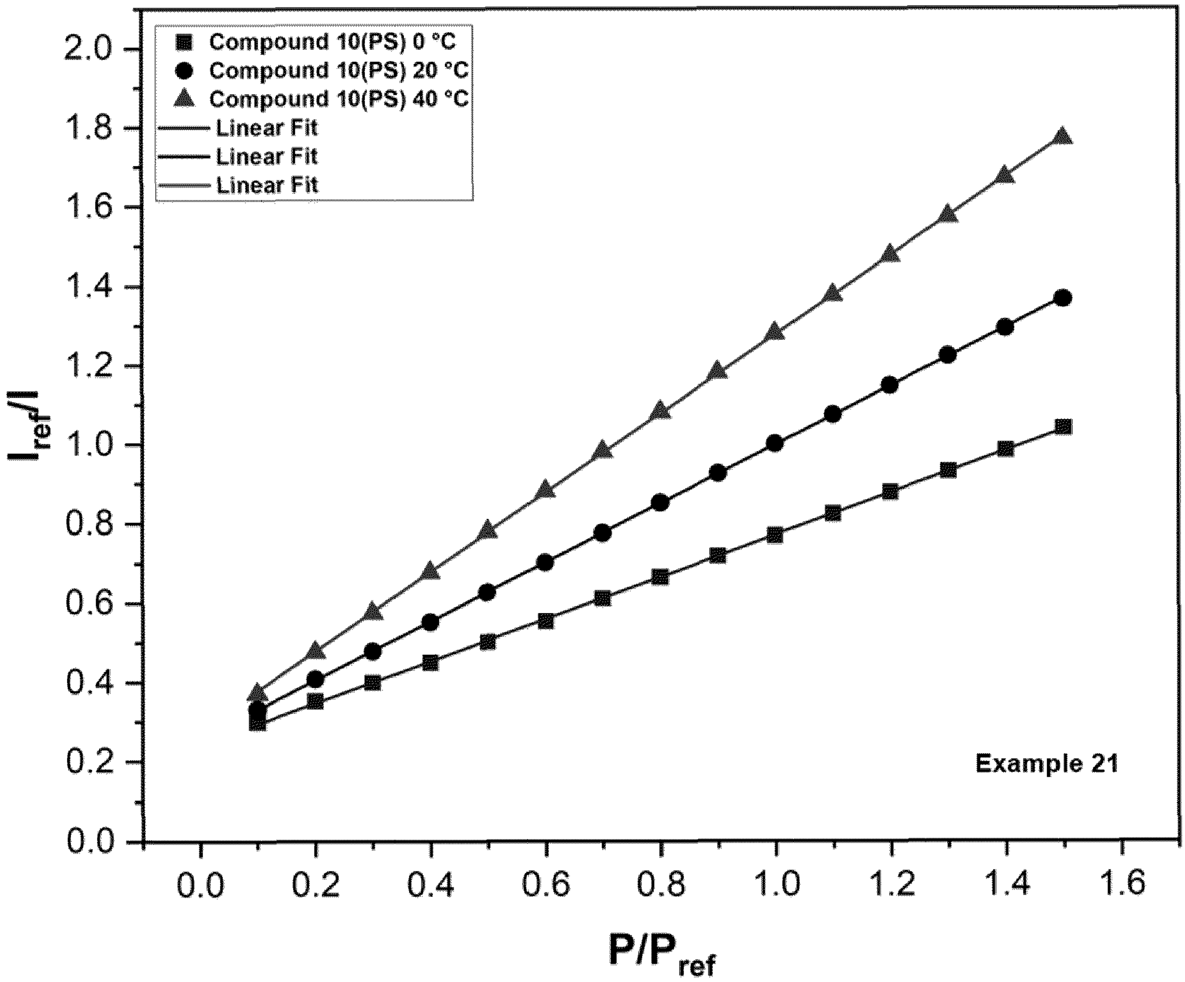
Compound 10(PS) 0 °C
Compound 10(PS) 20 °C
Compound 10(PS) 40 °C
Linear Fit
Linear Fit
Linear Fit
2.0
1.8
1.6
1.4
1.2
1.0
0.8
0.6
0.4
0.2
0.0
$I_{ref}/I$
0.0
0.2
0.4
0.6
0.8
1.0
1.2
1.4
1.6
$P/P_{ref}$
Example 21

Fig.7

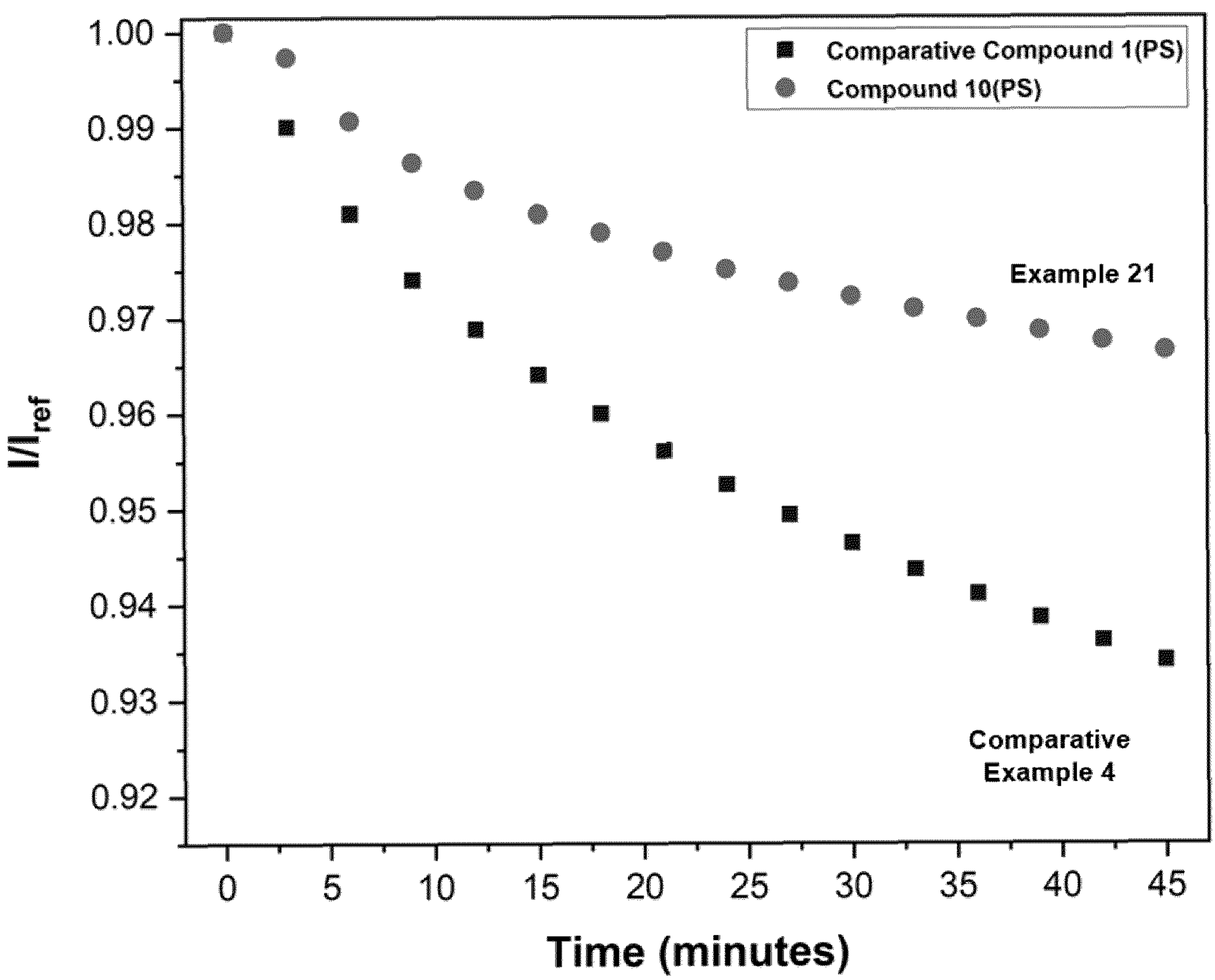
1.00
0.99
0.98
0.97
0.96
0.95
0.94
0.93
0.92
$I/I_{ref}$
0
5
10
15
20
25
30
35
40
45
Time (minutes)
Comparative Compound 1(PS)
Compound 10(PS)
Example 21
Comparative
Example 4

Fig.8

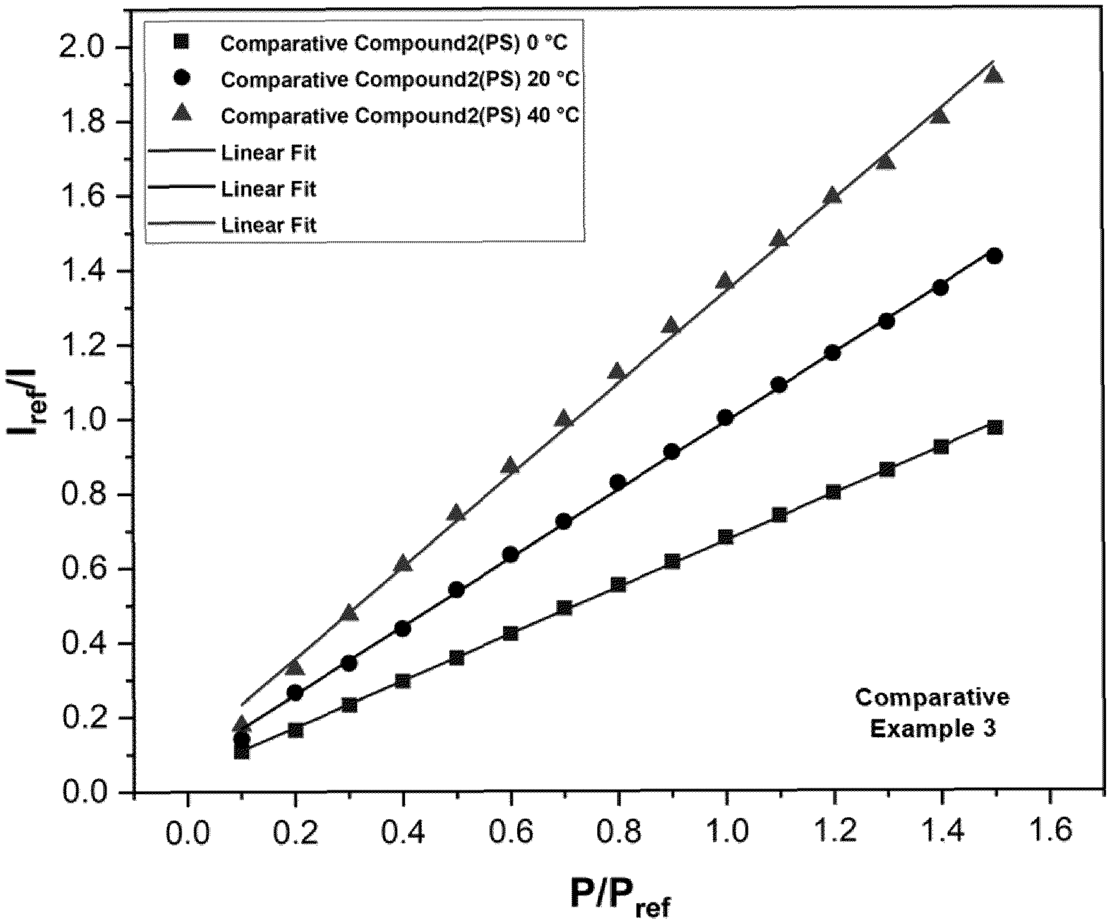
Comparative Compound2(PS) 0 °C
Comparative Compound2(PS) 20 °C
Comparative Compound2(PS) 40 °C
Linear Fit
Linear Fit
Linear Fit
Comparative Example 3
$I_{ref}/I$
$P/P_{ref}$
0.0
0.2
0.4
0.6
0.8
1.0
1.2
1.4
1.6
1.8
2.0

Fig.9

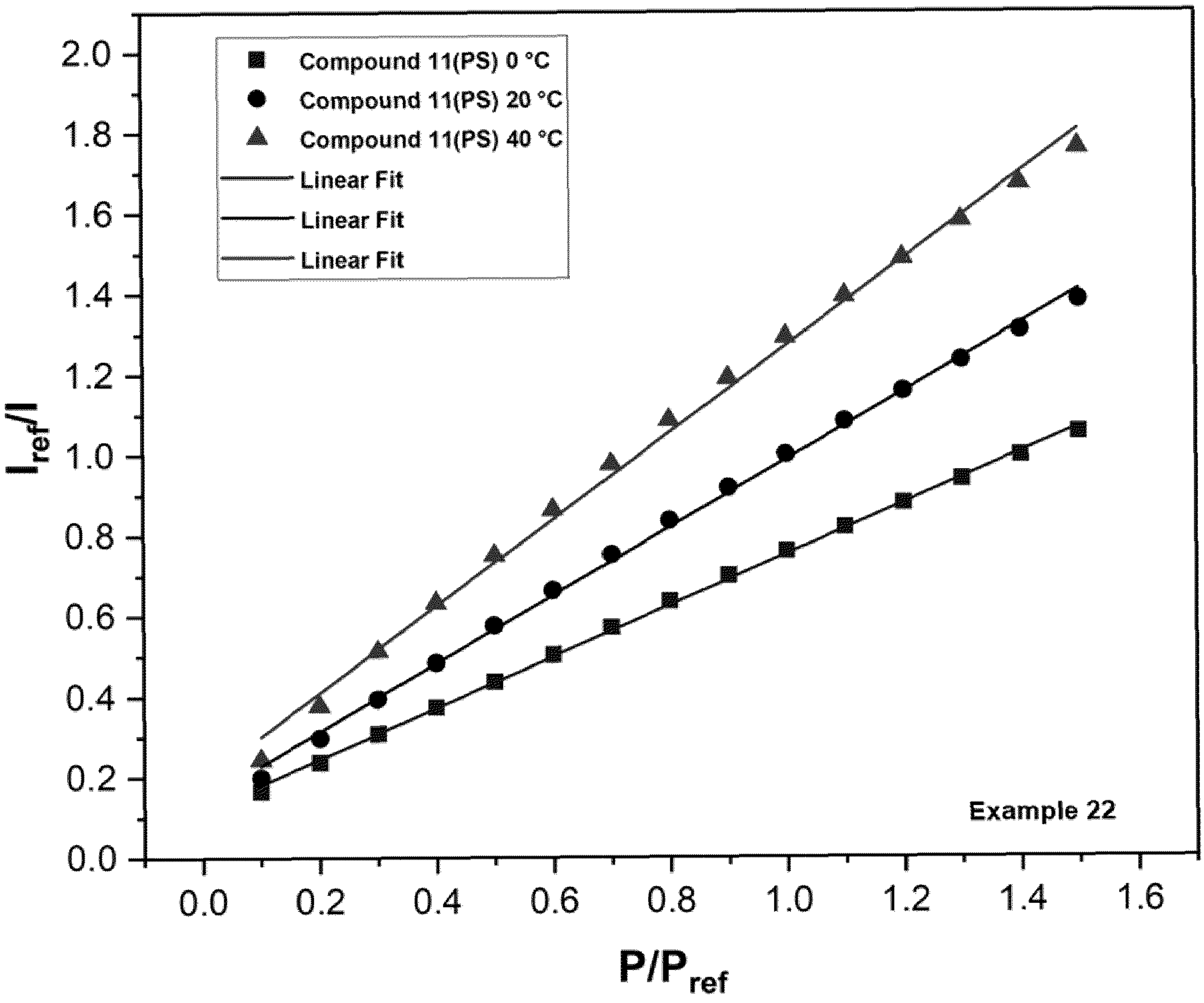
Compound 11(PS) 0 °C
Compound 11(PS) 20 °C
Compound 11(PS) 40 °C
Linear Fit
Linear Fit
Linear Fit
Example 22
$I_{ref}/I$
$P/P_{ref}$
2.0
1.8
1.6
1.4
1.2
1.0
0.8
0.6
0.4
0.2
0.0
0.0
0.2
0.4
0.6
0.8
1.0
1.2
1.4
1.6

Fig.10

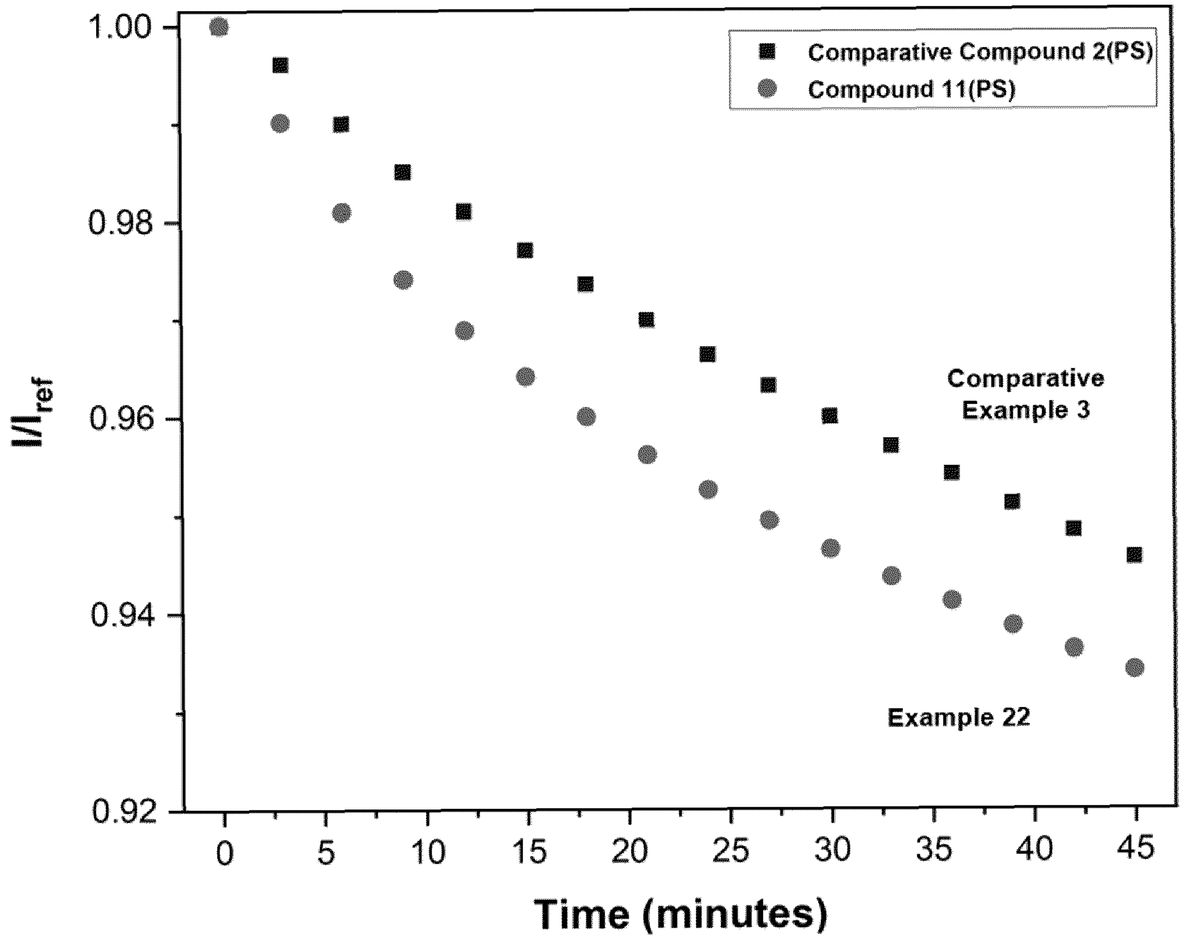

1.00
0.98
0.96
0.94
0.92
I/I_ref
0
5
10
15
20
25
30
35
40
45
Time (minutes)
Comparative Compound 2(PS)
Compound 11(PS)
Comparative Example 3
Example 22


Fig.11

Europäisches Patentamt / European Patent Office / Office européen des brevets

# EUROPEAN SEARCH REPORT

Application Number
EP 23 27 5167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 898 857 A (UNIV SOUTHERN SCI & TECH) 4 June 2021 (2021-06-04)<br>* abstract; claims 1-18; figures 1-5; example 1; table 1 *<br>----- | 1-15 | INV.<br>C09D5/00 |
| X | DE 10 2004 046520 A1 (JAPAN AEROSPACE EXPLORATION [JP])<br>21 April 2005 (2005-04-21)<br>* paragraph [0020] - paragraph [0025] *<br>* abstract; claims 1, 2; figures 1-5 *<br>----- | 1-15 | |
| X | JP 2005 029767 A (NAT AEROSPACE LAB)<br>3 February 2005 (2005-02-03)<br>* paragraph [0005] - paragraph [0008] *<br>* abstract; claims 1-5; figures 1-9; example 1 *<br>----- | 1-15 | |
| X | US 2003/175511 A1 (ASAI KEISUKE [JP] ET AL) 18 September 2003 (2003-09-18)<br>* paragraph [0008] - paragraph [0016] *<br>* abstract; claims 1-11; figures 1-7; examples 1, 2; tables 1, 2 *<br>----- | 1-15 | TECHNICAL FIELDS SEARCHED (IPC)<br>C09D |
| X | US 2002/110180 A1 (BARNEY ALFRED A [US] ET AL) 15 August 2002 (2002-08-15)<br>* paragraph [0005] - paragraph [0013] *<br>* paragraph [0020] - paragraph [0035] *<br>* abstract; claims 1-48; figures 1, 2 *<br>----- | 1-15 | |
| X | US 5 965 642 A (GOUTERMAN MARTIN P [US] ET AL) 12 October 1999 (1999-10-12)<br>* column 4, line 17 - line 31 *<br>* column 5, line 11 - line 61 *<br>* abstract; claims 1-24; figures 1-11; examples 1-4; tables 1, 2 *<br>-----<br>-/-- | 1-15 | |

The present search report has been drawn up for all claims

| Place of search | Date of completion of the search | Examiner |
|---|---|---|
| Munich | 25 March 2024 | Glomm, Bernhard |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 27 5167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2010 024348 A (JAPAN AEROSPACE EXPLORATION) 4 February 2010 (2010-02-04) * paragraph [0004] - paragraph [0009] * * paragraph [0011] - paragraph [0019] * * abstract; claims 1-4; figures 1-8; examples 1, 2 * ----- | 1-15 | |
| X,D | EILEEN PUKLIN ET AL: "Ideality of pressure-sensitive paint. I. Platinum tetra(pentafluorophenyl)porphine in fluoroacrylic polymer", JOURNAL OF APPLIED POLYMER SCIENCE, vol. 77, no. 13, 1 January 2000 (2000-01-01), pages 2795-2804, XP055270080, US ISSN: 0021-8995, DOI: 10.1002/1097-4628(20000923)77:13<2795::AID-APP1>3.0.CO;2-K * page 2795 - page 2804 * * abstract * ----- | 1-15 | TECHNICAL FIELDS SEARCHED (IPC) |

The present search report has been drawn up for all claims

2

| Place of search | Date of completion of the search | Examiner |
|---|---|---|
| Munich | 25 March 2024 | Glomm, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 23 27 5167

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2024

| Patent document cited in search report | Publication date | Patent family member(s) | Publication date |
|---|---|---|---|
| CN 112898857 A | 04-06-2021 | NONE | |
| DE 102004046520 A1 | 21-04-2005 | DE 102004046520 A1 | 21-04-2005 |
| | | JP 2005105160 A | 21-04-2005 |
| JP 2005029767 A | 03-02-2005 | NONE | |
| US 2003175511 A1 | 18-09-2003 | DE 10310747 A1 | 04-12-2003 |
| | | JP 2003270145 A | 25-09-2003 |
| | | US 2003175511 A1 | 18-09-2003 |
| US 2002110180 A1 | 15-08-2002 | CA 2437874 A1 | 22-08-2002 |
| | | EP 1364192 A1 | 26-11-2003 |
| | | JP 2004523753 A | 05-08-2004 |
| | | US 2002110180 A1 | 15-08-2002 |
| | | US 2006060862 A1 | 23-03-2006 |
| | | US 2008090385 A1 | 17-04-2008 |
| | | WO 02065077 A1 | 22-08-2002 |
| US 5965642 A | 12-10-1999 | NONE | |
| JP 2010024348 A | 04-02-2010 | JP 5544561 B2 | 09-07-2014 |
| | | JP 2010024348 A | 04-02-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **E. PUKLIN** ; **B. CARLSON** ; **S. GOUIN** ; **C. COSTIN** ; **E. GREEN** ; **S. PONOMAREV** ; **H. TANJI** ; **M. GOUTERMAN**. Ideality of pressure-sensitive paint. I. Platinum tetra(pentafluorophenyl)porphine in fluoroacrylic polymer. *Journal of Applied Polymer Science*, 2000, vol. 77, 2795-2804, https://doi.org/10.1002/1097-4628(20000923)77:13<2795
- Fluoro/isopropyl/butyl (FIB) polymer such as disclosed in Pulkin et al, Ideality of pressure-sensitive paint. I. Platinum tetra(pentafluorophenyl)porphine in fluoroacrylic polymer. *Journal of Applied Polymer Science*, 2000, vol. 77, 2795-2804
- **YUN SHAO et al.** Characterization of Response Frequency for the Pressure-Sensitive Paint Based on Fluorine-Containing Polymer Matrixes Using Oscillating Sound Wave Technique. *Sensors (Basel)*, November 2020, vol. 20 (21), 6310, https://www.ncbi.nlm.nih.gov/pmc/articles/PMC7663927/
- **JONATHAN S. LINDSEY et al.** Rothemund and Adler-Longo reactions revisited: synthesis of tetraphenylporphyrins under equilibrium conditions. *The Journal of Organic Chemistry*, 1987, vol. 52 (5), 827-836